# EUROPÄISCHE PATENTSCHRIFT

(11) **EP 4 212 980 B1**
(45) Veröffentlichungstag und Bekanntmachung des Hinweises auf die Patenterteilung: **02.04.2025**
(21) Anmeldenummer: 22215459.3
(22) Anmeldetag: 21.12.2022
(51) Int. Cl.: G05D 1/00, B60W 40/06, G06N 20/00, G01C 21/00, B60W 60/00, G06N 3/006, G06N 7/01, G08G 1/0968, H04L 67/12, G06N 3/092

(54) **FAHRASSISTENZEINRICHTUNG UND VERFAHREN ZUM DURCHFÜHREN EINER WENIGSTENS TEILAUTOMATISCHEN FAHRZEUGFUNKTION IN ABHÄNGIGKEIT VON EINER ZU BEWERTENDEN FAHRSTRECKE**
DRIVING ASSISTANCE DEVICE AND METHOD FOR CARRYING OUT AN AT LEAST SEMIAUTOMATIC VEHICLE FUNCTION DEPENDING ON A ROUTE TO BE CALCULATED
DISPOSITIF D'ASSISTANCE À LA CONDUITE ET PROCÉDÉ POUR EFFECTUER UNE FONCTION DE VÉHICULE AU MOINS PARTIELLEMENT AUTOMATIQUE EN FONCTION D'UNE DISTANCE DE CONDUITE À ÉVALUER

(30) Priorität: 18.01.2022 DE 102022200536
(43) Veröffentlichungstag der Anmeldung: 19.07.2023
(73) Patentinhaber: VOLKSWAGEN AG, 38440 Wolfsburg (DE)
(72) Erfinder: Templer, Maximilian, 38473 Tiddische (DE); Kaste, Jonas, 31061 Alfeld (Leine) (DE)

(56) Entgegenhaltungen:
- EP-A1- 4 047 316
- US-A1- 2017 102 703

## Beschreibung

Die vorliegende Erfindung bezieht sich auf eine Fahrassistenzeinrichtung und Verfahren zum Durchführen einer wenigstens teilautomatischen Fahrzeugfunktion in Abhängigkeit von einer zu bewertenden Fahrstrecke.

Aus dem Stand der Technik sind Fahrerassistenzsysteme für Kraftfahrzeuge bekannt, welche insbesondere hinsichtlich einer möglichst vollständig autonomen Fahrzeugführung weiterentwickelt werden sollen. Bei der heutzutage verfügbaren Fahrerassistenzsystemen ist jedoch zu beobachten, dass diese nicht in sämtlichen Verkehrssituationen und Umgebungen vollständig zuverlässig und fehlerfrei agieren können. Dies betrifft insbesondere Verkehrssituationen oder Umgebungen, die die dem jeweiligen Fahrassistenzsystem unbekannt sind, für welche dieses also beispielsweise nicht trainiert oder optimiert wurde. Somit besteht also im Sinne der Sicherheit Bedarf für Möglichkeiten, entsprechende Situationen sicher und zuverlässig zu handhaben.

Aus der US 2021/0165409 A1 ist eine adaptive Steuerung eines autonomen oder teilautonomen Fahrzeugs bekannt, welche sich zum Ziel setzt, die Entscheidungsfindung eines menschlichen Fahrers zur Erzeugung eines Pfads nachzuahmen, welche geeignet für die autonome Steuerung eines autonomen oder semi-autonomen Fahrzeugs ist. Hierzu wird ein Modell-basierter prädiktive Steuerung vorgeschlagen, der ein Bewegungs-Modell, die Abfolge von Zuständen und eine parametrische Wahrscheinlichkeitsverteilung sowie Informationen eines Erfassungssystems verwendet, um eine Kostenfunktion in Bezug auf einen Prädiktionshorizont zu optimieren. Hieraus wird eine Folge von Steuerbefehlen für eine oder mehrere Aktuatoren des Fahrzeugs erzeugt. Weiterhin wird eine Metrik der Bewegung des Fahrzeugs verwendet.

Aus der US 2014/0136414 A1 ist ein Verfahren und ein System eines autonomen nachbarschaftlichen Fahrzeugverkehrsnetzes in einer Gemeinschaft bekannt. Vorgeschlagen wird, ein Set von vorhergesagten Verhaltensweisen detektierter Objekte innerhalb einer Grenz-Entfernung von dem autonomen Nachbarschaftsfahrzeug zu berechnen und die Konfidenz-Level für die vorhergesagten Verhaltensweisen zu bestimmen. Dabei sind die Konfidenz-Level eine Zahl und/oder ein Prozentsatz der Wahrscheinlichkeit von jeder vorhergesagten Verhaltensweise aufzutreten.

Aus der US 2020/0192393 A1 ist ein autonomes Fahrsystem bekannt, welches sich basierend auf einer Beobachtung von Fahrsituationen, die nach dem Einsatz in der realen Umgebung (engl. Deployment) auftreten, selbst anpassen kann. Hierzu wird für unbekannte Situationen, bei denen Probleme auftreten, vorgeschlagen, die Problemlösung mit einer Mustererkennung zu verbinden und damit verschiedene Arten von Problemkategorien zu erhalten, indem verschiedene unbekannte Situationen in Gruppen eingeteilt werden. Weiterhin wird beschrieben, bei den durch ein vorgeschlagenes Verfahren vorgenommenen Erkundungen (engl. "exploration"), die Sicherheit derartiger Erkundungen zu bewerten. Hierzu ist etwa beschrieben, dass das Risiko basierend auf einem vorgegebenen Modell gemessen wird, welches einen minimalen Abstand zu dem nächstgelegenen Fahrzeug und/oder Fußgänger und/oder Straßenbegrenzung, sowie Grenzwerte für Beschleunigung und Geschwindigkeit überprüft.

Aus der EP 4 047 316 A1 ist ein Verfahren zum Bewerten einer Bekanntheit einer Fahrstrecke bekannt.

Aus der US 2017/0102703 A1 ist ein Verfahren und eine Vorrichtung zum Bereitstellen einer Lenkzuverlässigkeitskarte basierend auf gefahrenen Krümmungen und geometriebasierten Krümmungen bekannt.

Der vorliegenden Erfindung liegt die Aufgabe zugrunde, die aus dem Stand der Technik bekannten Nachteile zu überwinden und ein Verfahren zum Durchführen einer wenigstens teilautomatischen Fahrzeugfunktion, insbesondere einer Fahrfunktion, eines Fahrzeugs in Abhängigkeit von einer zu bewertenden Fahrstrecke sowie ein Fahrassistenzsystem bereitzustellen, deren Einsatz eine möglichst hohe Sicherheit bietet.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Ein erfindungsgemäßes (bevorzugt Computer-implementierten) Verfahren zum Durchführen einer wenigstens teilautomatischen und/oder teilautonome (bevorzugt autonomen) Fahrzeugfunktion, insbesondere einer Fahrfunktion und/oder Fahrzeugführung, eines Fahrzeugs in Abhängigkeit von einer zu bewertenden Fahrstrecke mittels einer insbesondere Prozessor-basierten Fahrassistenzeinrichtung, umfasst mehrere (insbesondere Computerimplementierte) Verfahrensschritte, welche insbesondere mit einer entsprechend eingerichteten elektronischen Recheneinrichtung (welche bevorzugt Bestandteil der Fahrassistenzeinrichtung ist oder mit dieser in Kommunikationsverbindung steht) und/oder bevorzugt mit der Fahrassistenzeinrichtung, insbesondere automatisch, durchgeführt werden.

Die Fahrassistenzeinrichtung kann beispielsweise ein vorgegebenes bzw. trainiertes und bevorzugt trainierbares Modell für die Durchführung der wenigstens teilautomatischen oder teilautonomen (bevorzugt autonomen) Fahrzeugfunktion, insbesondere einer Fahrfunktion und/oder Fahrzeugführung, des Fahrzeugs sein oder umfassen. Dies kann beispielsweise in Form eines, insbesondere tiefen, also mehrschichtigen, künstlichen neuronalen Netzes oder einer mittels eines Lernalgorithmus gelernten Strategie realisiert werden.

In einem (insbesondere computer-implementierten) Verfahrensschritt des erfindungsgemäßen Verfahrens, werden eine Vielzahl von Cluster aus Streckendaten in Bezug auf wenigstens eine bekannte Fahrstrecke bereitgestellt und/oder (beispielsweise von einer fahrzeuginternen Speichereinrichtung und/oder einem externen Server) abgerufen, wobei die Cluster die Streckendaten insbesondere abschnittsweise (in Bezug auf die bekannte Fahrstrecke) gemäß vorgegebener geometrischer Parameter gruppieren.

Unter dem Ausdruck "Gruppieren von Streckendaten" durch die Cluster wird insbesondere verstanden, dass jedem Cluster der Vielzahl der Cluster eine Vielzahl (bzw. eine Gruppe) von Streckendaten (in Bezug auf wenigstens eine bekannte Fahrstrecke) zugeordnet sind. Diese Zuordnung ist dabei insbesondere eindeutig. Jeder Streckendatenpunkt ist also genau einem Cluster zugeordnet.

Mit anderen Worten wird durch das Bereitstellen der Vielzahl von Cluster aus Streckendaten in Bezug auf wenigstens eine bekannte Fahrstrecke eine Vielzahl von Streckendaten in Bezug auf wenigstens eine bekannte Fahrstrecke bereitgestellt, wobei jeder Streckendatenpunkt eindeutig (genau) einem Cluster der Vielzahl von Clustern zugeordnet ist. Dabei ist jedem Cluster eine Vielzahl von Streckendatenpunkte zugeordnet.

Die Zuordnung bzw. Gruppierung der Streckendatenpunkte zu dem jeweiligen Cluster ist dabei bevorzugt das Ergebnis einer Beurteilung des Streckendatenpunkts in Bezug auf die vorgegebenen geometrischen Parameter. Hierdurch wird bevorzugt bewirkt, dass in Bezug auf die vorgegebene geometrische Parameter ähnliche Streckendatenpunkte demselben Cluster zugeordnet sind. Insbesondere ist die Gruppierung das Ergebnis einer Unterteilung der bekannten Fahrstrecke(n) in mehrere (kleinere) Streckenabschnitte, wobei die Unterteilung derart erfolgt, dass die Streckendatenpunkte in Bezug auf denselben Streckenabschnitt ähnliche Eigenschaften in Bezug auf die vorgegebenen geometrischen Parameter erfüllen und/oder demselben Cluster zugeordnet werden.

Durch die Vornahme einer Strecken-abschnittsweisen Zuordnung der einzelnen Streckenabschnitte (im Gegensatz zu einer punktweisen Zuordnung von einzelnen Streckendatenpunkte der Fahrstrecke) erfolgt daher insbesondere eine Zuordnung kausal, geometrisch und/oder zeitlich zusammenhängender Streckendatenpunkte zu demselben Cluster.

Neben den geometrischen Streckeneigenschaften, die eine kausalen Zusammenhang bzw. eine Ähnlichkeit zwischen Streckendatenpunkten beschreiben, können bevorzugt zeitliche Informationen oder eine Mindestanzahl an Punkten pro Cluster bestimmt werden, um die Segmentlänge einer Gruppe zu berücksichtigen.

Insbesondere werden daher zeitlich und/oder örtlich und/oder geometrisch zusammenhängende Streckendatenpunkte der Fahrstrecke (also alle Streckendatenpunkte eines insbesondere zeitlich und/oder örtlich und/oder geometrisch zusammenhängenden Streckenabschnitts der Fahrstrecke, welches besonders bevorzugt eine vorgegebene Mindestzeit bzw. Mindestlänge aufweist), demselben Cluster zugeordnet.

Die einzelnen Streckendatenpunkte können sich dabei auf (einander) verschiedene bekannte Fahrstrecken beziehen. Zwei voneinander verschiedene (bekannte) Fahrstrecken können dabei ein in Bezug auf die vorgegebenen geometrischen Parameter im Wesentliches identisches oder (hochgradig) ähnliches Streckensegment aufweisen. Die Streckendatenpunkte dieser beiden verschiedenen (bekannten) Fahrstrecken werden bevorzugt (im Rahmen des Gruppierungs-Prozesses) und/oder sind insbesondere demselben Cluster zugeordnet.

Die Vielzahl von Cluster aus Streckendaten können bevorzugt Ergebnis eines vorherigen Trainingsprozesses der Fahrassistenzeinrichtung sein, in welchem die Fahrassistenzeinrichtung beispielsweise anhand der Fahrstrecke trainiert wurde.

Bei der Fahrzeugfunktion, welche mittels der Fahrassistenzeinrichtung durchgeführt werden soll, handelt es sich bevorzugt um eine Fahrfunktion des Fahrzeugs wie beispielsweise eine Längsführung des Fahrzeugs und/oder eine Querführung des Fahrzeugs.

Eine Fahrstrecke kann (der Fahrassistenzeinrichtung) bekannt sein, wenn die Fahrassistenzeinrichtung beispielsweise anhand dieser Fahrstrecke trainiert oder optimiert wurde oder die Fahrassistenzeinrichtung ihre Aufgabe oder Funktion entlang dieser Fahrstrecke bereits - real oder simuliert - ausgeübt hat, also beispielsweise ein Fahrzeug bereits autonom oder teilautonom bzw. zumindest teilweise automatisiert entlang der jeweiligen Fahrstrecke geführt hat. Eine Fahrstrecke kann auch als bekannt gelten, wenn die Fahrstrecke einer weiteren Fahrassistenzeinrichtung (des Fahrzeugs oder eines weiteren Fahrzeugs) bekannt ist. Ebenso kann eine Fahrstrecke dann als (der Fahrassistenzeinrichtung) bekannt gelten, wenn beispielsweise eine Performanz der Fahrassistenzeinrichtung entlang dieser Fahrstrecke bereits bestimmt wurde.

Bei der zu bewertenden Fahrstrecke kann es sich um einen bezogen auf die aktuelle Fahrsituation des Fahrzeugs aktuelle Fahrstrecke bzw. einen aktuell befahrenen Streckenabschnitt handeln. Bei der zu bewertenden Fahrstrecke kann es sich auch um eine zukünftige und/oder geplante bzw. beabsichtigte Fahrstrecke handeln, welche beispielsweise von einem Nutzer des Fahrzeugs (der Fahrassistenzeinrichtung) vorgebbar und/oder mittels einer Mensch-Maschinenschnittstelle eingebbar ist.

Die Streckendaten geben dabei insbesondere die geometrische Eigenschaften der wenigstens einen bekannten Fahrstrecke oder der Vielzahl bekannter Fahrstrecken an. Diese Streckendaten sind dabei bevorzugt gemäß der geometrischen Eigenschaften in einem durch entsprechende vorgegebene geometrische Parameter aufgespannten Eigenschaftsraum gruppiert, also geclustert. Die geometrischen Eigenschaften können also konkrete Werte der vorgegebenen (geometrischen) Parameter für die jeweilige Fahrstrecke sein, also Datenpunkte, Punktewolken oder Punktegruppen in dem Eigenschaftsraum bilden. Die Parameter bzw. die geometrischen Eigenschaften können beispielsweise lokale Kurvenradien oder Krümmungen, Krümmungsrichtungen, Krümmungsänderungen, Fahrbahnbreiten, räumliche Streckenkoordinaten, Abstände einer Trajektorie zu einem Fahrbahnrand und/oder dergleichen mehr sein oder beschreiben. Die Streckendaten können beispielsweise rechnergestützt für simulierte unbekannte Fahrstrecken bereitgestellt werden und/oder während einer Fahrt eines Messfahrzeugs entlang der Fahrstrecken mittels entsprechender Sensoreinrichtungen aufgenommen werden.

Mit anderen Worten werden und/oder sind anhand von Größen der Trajektorienplanung (z.B. Referenzkrümmung bzw. Kurvenkrümmung, Geschwindigkeit sowie Beschleunigung) sowie bereits erlebter Fahrszenarien Cluster gebildet oder bereits derart gebildete Cluster bereitgestellt.

Weiterhin werden (insbesondere in einem computer-implementierten Verfahrensschritt), insbesondere mittels (wenigstens) einer Sensoreinrichtung erfasste, Verlaufsdaten, die (zumindest) einen Verlauf der zu bewertenden Fahrstrecke angeben, bereitgestellt. Beispielsweise können die Verlaufsdaten charakteristisch sein für einen geometrischen Verlauf der zu bewertenden Fahrstrecke und/oder für einen (insbesondere wenigstens abschnittsweisen) Verlauf fahrdynamischer Kenngrößen (insbesondere des Fahrzeugs) entlang der zu bewertenden Fahrstrecke. So können die Verlaufsdaten beispielsweise Bewegungsdaten, wie Geschwindigkeit oder Beschleunigung entlang der Fahrstrecke umfassen. Dabei kann es sich bei den Bewegungsdaten um aktuelle Daten des Fahrzeugs und/oder um beispielsweise prognostizierte oder durchschnittliche Werte bezogen auf eine Vielzahl von Fahrzeugen und/oder um (vorgegebene) Grenzwerte handeln.

Bevorzugt werden Verlaufsdaten zu der zu bewertenden Fahrstrecke bereitgestellt, welche charakteristisch sind für die geometrischen Eigenschaften der zu bewertenden Fahrstrecke in Bezug auf die (für die Streckendaten in Bezug auf die wenigstens eine bekannte Fahrstrecke) vorgegebenen geometrischen Parameter.

Für die zu bewertende Fahrstrecke werden, insbesondere aus den Verlaufsdaten, deren geometrische Eigenschaften, also insbesondere die entsprechenden Datenpunkte in dem genannten Eigenschaftsraum, analog zu den Streckendaten der wenigstens einen bekannten Fahrstrecke bestimmt. Mit anderen Worten werden also für die jeweilige zu bewertende Fahrstrecke diejenigen Daten oder Eigenschaften bestimmt, die auch für die wenigstens eine bekannte Fahrstrecke bereitgestellt wurden.

Bevorzugt handelt es sich bei der Sensoreinrichtung um eine Sensoreinrichtung des Fahrzeugs, welche die (insbesondere aktuellen) Verlaufsdaten erfasst und/oder ermittelt und welche bevorzugt diese Verlaufsdaten zur Weiterverarbeitung (insbesondere durch die Fahrassistenzeinrichtung) an einer (insbesondere fahrzeuginternen) Speichereinrichtung ablegt und/oder an die Fahrassistenzeinrichtung übermittelt. Denkbar ist auch, dass die Sensordaten wenigstens teilweise zusätzlich oder alternativ an eine in Bezug auf das Fahrzeug externe Speichereinrichtung, etwa einen externen Server wie einen Backend-Server, übermittelt werden. Denkbar ist auch, dass es sich bei wenigstens einer der die Verlaufsdaten erfassenden Sensoreinrichtung um eine fahrzeugexterne Sensoreinrichtung handelt. Dabei kann es sich beispielsweise um die Sensoreinrichtung eines weiteren Verkehrsteilnehmers wie eines vorausfahrenden Fahrzeugs oder einer Infrastruktureinrichtung handeln, wobei die Verlaufsdaten bevorzugt über eine drahtlose Kommunikationsverbindung an das Fahrzeug und insbesondere die Fahrassistenzeinrichtung übertragen werden.

Bei den Verlaufsdaten kann es sich alternativ oder zusätzlich um nicht-fahrzeugbezogene Daten handeln, wie beispielsweise Kartendaten, welche einen geometrischen Verlauf der zu bewertenden Fahrstrecke angeben oder hierfür charakteristisch sind, und/oder durchschnittliche fahrdynamische Kenngrößen (etwa ein Geschwindigkeits- und/oder ein Beschleunigungsprofil entlang der zu bewertenden Fahrstrecke), welche beispielsweise prognostiziert, simuliert und/oder etwa aus dem Fahrverhalten weiterer Fahrzeuge auf der zu bewertenden Fahrstrecke abgeleitet werden kann.

Weiterhin werden die Cluster (insbesondere in einem computer-implementierten Verfahrensschritt) auf die Verlaufsdaten angewendet, um bevorzugt die zu bewertende Fahrstrecke in zu den Clustern korrespondierende Streckenabschnitte aufzuteilen und hierdurch den einzelnen Streckenabschnitten jeweils (bevorzugt genau) einen Cluster zuzuordnen. Unter zu den Clustern korrespondierende Streckenabschnitte wird insbesondere verstanden, dass die jeweiligen Streckenabschnitte hinsichtlich ihrer geometrischen Eigenschaften (in Bezug auf die vorgegebenen geometrischen Parameter) den ihnen jeweils zugeordneten Clustern am ähnlichsten sind und/oder etwa eine Korrelation der geometrischen Eigenschaften (in Bezug auf die vorgegebenen geometrischen Parameter) der jeweiligen Streckenabschnitte mit den ihnen zugeordneten Clustern (in dem Eigenschaftsraum) am höchsten ist.

Bevorzugt bewirkt die Anwendung der Cluster auf die Verlaufsdaten eine insbesondere streckenabschnittsweise Zuordnung der Cluster zu der zu bewertenden Fahrstrecke. Bevorzugt basiert die Zuordnung der Cluster zu der zu bewertende Fahrstrecke und insbesondere zu den jeweiligen (insbesondere ebenfalls mittels der Anwendung der Cluster ermittelte) Streckenabschnitte der zu bewertenden Fahrstrecke. Bevorzugt wird dabei eine Zuordnung eines Clusters zu der zu bewertenden Fahrstrecke oder einem Streckenabschnitt beispielsweise derart gewählt, dass die zu bewertende Fahrstrecke oder der Streckenabschnitt der zu bewertenden Fahrstrecke die höchste Korrelation (insbesondere in Bezug auf die geometrischen Eigenschaften) zu diesem Cluster in Vergleich auf die übrigen Cluster der (gesamten) Vielzahl von Clustern (in dem Eigenschaftsraum) aufweist.

Bevorzugt werden (insbesondere durch das Anwenden der Cluster auf die Verlaufsdaten) die Verlaufsdaten (insbesondere Datenpunkt-weise), bevorzugt höchstens und besonders bevorzugt genau, einem Cluster zugeordnet. Dadurch kann die zu bewertende Fahrstrecke insbesondere in Streckenabschnitte zerlegt werden, welche jeweils einzeln einem der Cluster zugeordnet werden. Dadurch kann vorteilhaft erreicht werden, dass die zu bewertende Fahrstrecke abschnittsweise evaluiert werden kann und durch die abschnittsweise Zuordnung eines Clusters beispielsweise eine Bekanntheit des jeweiligen Streckenabschnitts (und damit der gesamten zu bewertenden Fahrstrecke) evaluiert werden kann. Dies bietet den Vorteil einer sehr genauen Analyse der zu bewertenden Fahrstrecke.

Bevorzugt wird bei der Anwendung der Cluster auf die Verlaufsdaten (insbesondere automatisch) ein Abstand der geometrischen Eigenschaften der jeweiligen zu bewertenden Fahrstrecke zu den geometrischen Eigenschaften der wenigstens einen bekannten Fahrstrecke in dem aufgespannten Eigenschaftsraum bestimmt. Es kann dafür ein Abstand zwischen den entsprechenden Datenpunkten im Eigenschaftsraum oder etwa ein Abstand der jeweiligen geometrischen Eigenschaft, also des jeweiligen Datenpunkts zu einem Centroiden, also einem geometrischen Schwer- oder Mittelpunkt von Gruppen oder Clustern der geometrischen Eigenschaften der bekannten Fahrstrecken, bestimmt werden. Dabei kann es sich jeweils etwa um den Centroiden desjenigen Clusters handeln, innerhalb von dessen Grenzen die jeweilige geometrische Eigenschaft, also der jeweilige entsprechende Datenpunkt, der zu bewertenden Fahrstrecke liegt. Ebenso kann der jeweilige Abstand zu dem jeweils nächstliegenden Centroiden bestimmt werden. Je nach Anzahl der für die zu bewertenden Fahrstrecke bestimmten geometrischen Eigenschaften können auf diese Weise mehrere einzelne Abstände bestimmt werden. Diese können dann im Folgenden separat oder individuell weiterverarbeitet werden. Ebenso kann gegebenenfalls ein mittlerer Abstand mehrerer Datenpunkte zu dem oder den Centroiden bestimmt werden.

Bevorzugt erfolgt (insbesondere analog zur obig beschriebenen Bildung der Cluster aus Streckendaten in Bezug auf wenigstens eine bekannte Fahrstrecke) einer Streckenabschnittsweise Zuordnung der einzelnen Streckenabschnitte der zu bewertenden Fahrstrecke (im Gegensatz zu einer punktweisen Zuordnung von einzelnen Streckendatenpunkte der zu bewertenden Fahrstrecke) und damit insbesondere eine Zuordnung von kausal, geometrisch und/oder zeitlich zusammenhängenden Streckendatenpunkten zu demselben Cluster.

Insbesondere werden zeitlich und/oder örtlich und/oder geometrisch zusammenhängende Streckendatenpunkte der zu bewertenden Fahrstrecke (also alle Streckendatenpunkte eines insbesondere zeitlich und/oder örtlich und/oder geometrisch zusammenhängenden Streckenabschnitts der zu bewertenden Fahrstrecke, welches besonders bevorzugt eine vorgegebene Mindestzeit bzw. Mindestlänge aufweist), demselben Cluster zugeordnet.

Basierend auf dem bestimmten Abstand oder den bestimmten Abständen kann beispielsweise eine Bekanntheit der jeweiligen zu bewertenden Fahrstrecke angegeben bzw. bestimmt werden. Beispielsweise kann das Inverse des Abstands unmittelbar als Maß für die Bekanntheit verwendet werden, sodass bei größerem Abstand der geometrischen Eigenschaften also eine kleinere Bekanntheit, das heißt ein geringerer Bekanntheitsgrad, der zu bewertenden Fahrstrecke angegeben wird. Ebenso kann die Bekanntheit basierend auf dem bestimmten Abstand gemäß einer vorgegebenen Berechnungsvorschrift ermittelt werden.

Bevorzugt wird eine Vielzahl von geometrischen Eigenschaften, die an einer Vielzahl von Messpunkten entlang der zu bewertenden Fahrstrecke erfasst bzw. bestimmt wurden, bereitgestellt und/oder erfasst und in die bereits bestehenden Cluster direkt zugeordnet.

Ebenso können, falls zu der zu bewertenden Fahrstrecke eine Vielzahl von geometrischen Eigenschaften vorliegt, die an einer Vielzahl von Messpunkten entlang der Fahrstrecke bestimmt wurden, so können diese in dem Eigenschaftsraum ihrerseits Cluster bilden. Diese sich für die jeweilige zu bewertende Fahrstrecke ergebenden Cluster können dann mit den Clustern der bekannten Fahrstrecken verglichen werden. Der Abstand der geometrischen Eigenschaften kann dann als beispielsweise als Ähnlichkeit, Übereinstimmungsgrad, Überlappung oder Centroidabstand des oder der Cluster der jeweiligen zu bewertenden Fahrstrecke und der Cluster der bekannten Fahrstrecken bestimmt werden oder gegeben sein.

Mit anderen Worten kann also basierend auf den geometrischen Eigenschaften ein Grad der Ähnlichkeit oder Übereinstimmung der zu bewertenden Fahrstrecke mit den bekannten Fahrstrecken ermittelt werden. Dies kann für die jeweilige Fahrstrecke insgesamt, für einzelne Abschnitte der Fahrstrecke oder für einzelne Punkte der Fahrstrecke durchgeführt werden.

In einem weiteren (insbesondere Computer-implementierten) Verfahrensschritt wird wenigstens eine Unsicherheitsgröße ermittelt, die charakteristisch ist für eine Unsicherheit (engl. "uncertainty") in Bezug auf die vorgenommene Zuordnung zwischen wenigstens einem der Streckenabschnitte und dem diesem Streckenabschnitt (jeweils) zugeordneten Cluster. Die Unsicherheit bzw. die Unsicherheitsgröße beschreibt insbesondere eine Fehlerwahrscheinlichkeit für die erfolgte Zuordnung zu einem bestimmten Cluster. Dabei kann die Unsicherheitsgröße charakteristisch sein für die Unsicherheit bzw. eine Konfidenz der gewählten Cluster-Zuordnung (genau) eines Streckenabschnitts und bevorzugt für die Cluster-Zuordnung mehrerer Streckenabschnitte der zu bewertenden Fahrstrecke und besonders bevorzugt für die (Streckenabschnitts-weise) Cluster-Zuordnung der im Wesentlichen gesamten zu bewertenden Fahrstrecke.

Beispielsweise kann die Unsicherheitsgröße ermittelt werden, indem die Abstände der entsprechenden Datenpunkte (des Streckenabschnitts bzw. der Streckenabschnitte) im Eigenschaftsraum oder etwa der Abstand der jeweiligen geometrischen Eigenschaft, zu den jeweiligen Centroiden der Vielzahl von Clustern (der geometrischen Eigenschaften) der wenigstens einen bekannten Fahrstrecke miteinander verglichen werden. Denkbar ist auch, dass zur Ermittlung der Unsicherheitsgröße der (etwa mittlere) Abstand der Datenpunkte des betreffenden Streckenabschnitts zu dem diesem Streckenabschnitt zugeordneten Cluster bestimmt wird und dieser Abstand oder eine hierfür charakteristische Größe mit einem (vorgegebenen) Schwellwert verglichen wird.

In einem weiteren (insbesondere Computer-implementierten) Verfahrensschritt wird (wenigstens) eine Steuergröße in Abhängigkeit der Unsicherheitsgröße ermittelt. Bevorzugt wird die Steuergröße zur Durchführung der (wenigstens einen) Fahrzeugfunktion (durch die Fahrassistenzeinrichtung) bereitgestellt und bevorzugt verwendet. Bevorzugt wird die Fahrzeugfunktion in Abhängigkeit der Cluster-Zuordnung wenigstens eines Streckenabschnitts der zu bewertenden Fahrstrecke und bevorzugt in Abhängigkeit von der Cluster-Zuordnung der im Wesentlichen gesamten zu bewertenden Fahrstrecke durchgeführt. Für jeden Streckenabschnitt der zu bewertenden Fahrstrecke, dem ein Cluster zugeordnet ist, kann beispielsweise in Abhängigkeit von dem jeweils zugeordneten Cluster eine Steuergröße ermittelt und zur Durchführung der Fahrzeugfunktion bereitgestellt und verwendet werden.

Mit anderen Worten kann durch die Zuordnung wenigstens eines Clusters zu der zu bewertenden Fahrstrecke ermittelt werden, welches der bereitgestellten Cluster bestmöglich mit der neuen zu bewertenden Fahrstrecke in Bezug auf vorgegebene geometrische Parameter, beispielsweise in Bezug auf geometrische Parameter der Fahrstrecke und/oder beispielsweise in Bezug auf die Geschwindigkeit des Fahrzeugs, mit welcher das Fahrzeug die zu bewertende Fahrstrecke durchläuft, Beschleunigung des Fahrzeugs entlang der zu bewertenden Fahrstrecke und/oder Kurvenkrümmung der Fahrstrecke, vergleichbar ist. Damit können unbekannte zu bewertende Fahrstrecken in Bezug auf die bereits bekannten Fahrstrecken bewertet werden.

Das vorgeschlagene Verfahren bietet den Vorteil, dass nicht nur eine Bekanntheit der zu bewertenden Fahrstrecke bestimmt werden kann sondern durch Ermittlung der Unsicherheitsgröße eine Unsicherheitsabschätzung (engl. "uncertainty estimation") zur Bewertung der zu bewertenden Fahrstrecke vorgenommen wird, welche vorteilhaft bei der Durchführung der Fahrzeugfunktion berücksichtigt wird. Dabei wird zur Ermittlung der Unsicherheitsgröße vorgeschlagen, die (insbesondere abschnittsweise) Zuordnung der basierend auf bekannten Streckendaten bereitgestellter Cluster zu einer neuen zu bewertenden Fahrstrecke zu bewerten. Die Unsicherheitsabschätzung fungiert vorteilhaft als Sicherheitsaspekt für mögliche Eingriffe des durch die Fahrassistenzeinrichtung durchgeführten Fahrzeugfunktion. Falls die jeweils bestimmte Unsicherheitsgröße der jeweils zu bewertenden Fahrstrecke größer als ein vorgegebener Schwellenwert ist, kann beispielsweise automatisch eine vorgegebene Sicherheitsfunktion der Fahrassistenzeinrichtung oder eines Trainingsmechanismus zum Trainieren des lernfähigen Modells aktiviert werden.

Durch die Ermittlung der Unsicherheitsgröße kann damit vorteilhaft die Unsicherheit des zugrundeliegenden lernfähigen und/oder trainierten Modells analysiert und diese bei der Ausführung von Fahrzeugfunktionen basierend auf dem lernfähigen und/oder trainierten Modell berücksichtigt werden.

Bevorzugt kann das geometrische Clustering zum Bewerten einer Bekanntheit einer Fahrstrecke für die Fahrassistenzeinrichtung verwendet werden. Mit anderen Worten kann angegeben werden, ob die jeweilige zu bewertende Fahrstrecke einer oder mehreren anderen Fahrstrecken, die der Fahrassistenzeinrichtung bereits bekannt sind, ähnlich ist oder nicht.

Dies bietet den Vorteil, dass die Performanz der Fahrassistenzeinrichtung besonders objektiv bestimmt werden kann. Beispielsweise kann die Performanz bestimmt oder gemessen werden an vorgegebenen Sicherheits- und/oder Leistungsparametern, wie etwa einer Einhaltung von Verkehrsregeln, erlaubten Geschwindigkeiten, als sicher eingestuften Grenzwerten für Abstände, Geschwindigkeiten, Beschleunigungen, vorgegebenen Komfortgrenzwerten, etwa hinsichtlich einer Abruptheit von Manövern oder einer Rate von Geschwindigkeits- und/oder Richtungswechseln, und/oder dergleichen mehr. Ebenso kann die Performanz in einem Zustandsraum bzw. anhand von Fahrstrecken oder Fahrstreckenabschnitten in einem Zustandsraum evaluiert werden, wobei in dem Zustandsraum etwa geometrische Eigenschaften der Fahrstrecke bzw. der Fahrstreckenabschnitte angegeben sein können. Wie auch weiter untern näher erläutert wird, kann mittels der vorliegenden Erfindung dann die Performanz der Fahrassistenzeinrichtung auch für der Fahrassistenzeinrichtung bis zu einer ersten Verarbeitung unbekannte Fahrstrecken oder Fahrstreckenabschnitte evaluiert werden. Darüber hinaus kann eine weitere oder andere Metrik zum Bestimmen bzw. Evaluieren, also Bewerten der Performanz verwendet werden.

Das geometrische Clustering kann damit als objektives Gütefunktional zur Beurteilung der Generalisierbarkeit eines der Fahrassistenzeinrichtung zugrundeliegenden (lernfähigen und/oder trainierten) Modells verwendet werden. Insbesondere kann eine (nachfolgend näher beschriebene) Performanz der Fahrassistenzeinrichtung mit dem hier vorgeschlagenen Verfahren des geometrischen Clusterings besonders objektiv bestimmt werden.

Eine Zuordnung von neuen Fahrsituationen bzw. neuen zu bewertenden Fahrstrecken kann anschließend für neue Cluster online (d.h. insbesondere während der Fahrzeugführung) im Fahrzeug stattfinden. Über eine zu definierende Metrik aus beispielsweise Abstand zum Zentrum des Clusters, gegebenenfalls dem zeitlichen Verlauf fahrdynamischer Kenngrößen oder der Bestimmtheit des Agenten in der jeweiligen Fahrsituation (Kombination mit bayesschen Ansätzen sind hier möglich) kann eine Aussage bezüglich des Explorationsbetrags getroffen werden.

Bei einem bevorzugten Verfahren umfassen die vorgegebenen geometrischen Parameter eine lokale Kurvenkrümmung, eine lokale Krümmungsrichtung in Fahrtrichtung, eine lokale Fahrbahnbreite, einen lokalen Abstand einer Fahrzeugtrajektorie entlang der Fahrstrecke zu einem Fahrbahnrand, einen lokalen Abstand einer Fahrzeugtrajektorie entlang der Fahrstrecke zu einem Fahrstreifenrand, lokale räumliche Streckenkoordinaten entlang der Fahrstrecke, eine lokale Geschwindigkeit eines Fahrzeugs entlang der Fahrstrecke und/oder eine lokale Beschleunigung eines Fahrzeugs entlang der Fahrstrecke. Größen wie eine Geschwindigkeit und/oder eine Beschleunigung bzw. durch ein Geschwindigkeits- und/oder Beschleunigungsprofil (longitudinal und/oder lateral) können dabei bevorzugt auch zur geometrischen Beschreibung einer (Fahrzeug-)Trajektorie verwendet werden.

Die Größen der Beschleunigungs- und Geschwindigkeitsprofile geben darüber hinaus bevorzugt Informationen über zurückliegende Geometrien. So kann ein geometrisch lokal identischer Streckenabschnitt unterschiedliche Wunsch-Geschwindigkeiten und - Beschleunigungen aufweisen, die aufgrund von vorherigen Streckeneigenschaften variieren. Ein Beispiel: Kurve nach einer langen Geradeausfahrt gegenüber einer Kurvenkombination. Bevorzugt wird (daher) aus einem Beschleunigungs- und/oder Geschwindigkeitsprofil (insbesondere auch jeweils entlang der Fahrstrecke) wenigstens eine geometrische Größe in Bezug auf den geometrischen Verlauf der durchfahrenen Fahrstrecke (etwa hinsichtlich einer Krümmung einer durchfahrenen Kurve) ermittelt.

Mit anderen Worten werden also einer, mehrere oder alle dieser Parameter vorgegeben, um den Eigenschaftsraum auszuspannen. Die geometrischen Eigenschaften der Fahrstrecken werden als Werte dieser Parameter angegeben bzw. bestimmt. Lokal bedeutet hier, dass die entsprechenden Parameterwerte, also die entsprechenden geometrischen Eigenschaften, an jeweils einem Messpunkt auf der jeweiligen Fahrstrecke ermittelt werden bzw. gelten. Entlang der jeweiligen Fahrstrecke kann dabei eine Vielzahl solcher Messpunkte liegen. Mit anderen Worten kann also für eine bestimmte Fahrstrecke beispielsweise die Krümmung in Fahrtrichtung für eine Vielzahl von Messpunkten entlang der Fahrstrecke angegeben werden, um die geometrischen Eigenschaften der Fahrstrecke festzulegen oder anzugeben. Durch die Verwendung der hier vorgeschlagenen Parameter können unterschiedlichste Fahrstrecken hinsichtlich ihrer geometrischen Eigenschaften robust charakterisiert werden.

In einer weiteren möglichen Ausgestaltung der vorliegenden Erfindung werden die geometrischen Eigenschaften in dem Eigenschaftsraum mittels einer Clusteranalyse gruppiert. Daraus resultierende Cluster, also Gruppen von Datenpunkten in dem Eigenschaftsraum, werden auf die Verlaufsdaten der jeweiligen zu bewertenden Fahrstrecke angewendet, um die jeweilige zu bewertende Fahrstrecke in zu den Clustern korrespondierende Streckenabschnitte aufzuteilen. Die Bekanntheit der zu bewertenden Fahrstrecke wird dann individuell für diese einzelnen Streckenabschnitte bestimmt. Schließt sich entlang der Fahrstrecke beispielsweise ein gerades Stück an eine Kurve an, so können die entlang oder in der Kurve bestimmten geometrischen Eigenschaften sich hinsichtlich einer Kurvenkrümmung in dem Eigenschaftsraum zu einem ersten Cluster gruppieren und die entlang oder auf dem geraden Stück ermittelten geometrischen Eigenschaften hinsichtlich der Krümmung sich in dem Eigenschaftsraum zu einem zweiten Cluster gruppieren. Beispielsweise anhand der räumlichen Streckenkoordinaten der zu einem Cluster gehörenden Datenpunkte oder geometrischen Eigenschaften können dann insbesondere durch eine Zuordnung von (bevorzugt zusammenhängenden) Streckenabschnitten in ein (insbesondere gleiches) Cluster die korrespondierenden Streckenabschnitte der Fahrstrecke bestimmt werden. Die abschnittsweise Bewertung der Bekanntheit kann dementsprechend detaillierte Daten für die jeweilige Fahrstrecke liefern, also eine entsprechend genauere oder robustere Beurteilung der Bekanntheit der Fahrstrecke ermöglichen. Dies ermöglicht dann auch eine entsprechend genauere und robustere Bewertung der Performanz der Fahrassistenzeinrichtung.

Die zu bewertende Fahrstrecke kann also in mehrere Streckenabschnitte unterteilt werden, wobei für jeden Streckenabschnitt die diesem zugeordneten geometrischen Eigenschaften, also die diesem zugeordneten Datenpunkte in dem Eigenschaftsraum, basierend auf den Clustern der geometrischen Eigenschaften der bekannten Fahrstrecken analysiert werden. In Abhängigkeit davon wird für jeden Streckenabschnitt ein Übereinstimmungsgrad mit den bekannten Fahrstrecken ermittelt. Der Übereinstimmungsgrad kann dabei in Abhängigkeit von einer Zuordnungssicherheit ermittelt werden, welche angibt, mit welcher Sicherheit oder Konfidenz ein jeweiliger Datenpunkt einem bestimmten Cluster zugeordnet ist oder zugeordnet werden kann. Die Zuordnungssicherheit beschreibt mit anderen Worten also eine Fehlerwahrscheinlichkeit für die erfolgte Zuordnung zu einem bestimmten Cluster. Die Zuordnungssicherheit kann in Abhängigkeit von einem jeweiligen Abstand des jeweiligen Punkts zu dem Centroiden des entsprechenden Clusters und/oder in Abhängigkeit von einer Verteilung von dem Cluster zugeordneten Datenpunkte der bekannten Fahrstrecken bestimmt werden bzw. gegeben sein. Die Zuordnungssicherheit kann umso kleiner sein, je größer der Abstand ist bzw. je diffuser der jeweilige Cluster ist. Ebenso kann die Verteilung der dem jeweiligen Cluster zugeordneten bzw. den jeweiligen Cluster bildenden Datenpunkte anhand von deren mittlerem Abstand zum Centroiden des jeweiligen Clusters, einem maximalen Abstand eines Datenpunkte des jeweiligen Clusters zu dessen Centroiden und/oder eine ähnliche Metrik charakterisiert werden.

In analoger Weise zur Zuordnungssicherheit kann die Unsicherheit in Bezug auf die vorgenommene Zuordnung zwischen wenigstens einem der Streckenabschnitte und dem diesem Streckenabschnitt zugeordneten Cluster ermittelt werden. So kann die Unsicherheit (insbesondere unmittelbar) aus der Zuordnungssicherheit ermittelt werden. Insbesondere kann die Unsicherheit in Abhängigkeit von einem jeweiligen Abstand des jeweiligen Punkts zu dem Centroiden des entsprechenden Clusters und/oder in Abhängigkeit von einer Verteilung von dem Cluster zugeordneten Datenpunkte der bekannten Fahrstrecken bestimmt werden bzw. gegeben sein. Die Unsicherheit kann umso größer sein, je größer der Abstand ist bzw. je diffuser der jeweilige Cluster ist. Ebenso kann die Verteilung der dem jeweiligen Cluster zugeordneten bzw. den jeweiligen Cluster bildenden Datenpunkte anhand von deren mittlerem Abstand zum Centroiden des jeweiligen Clusters, einem maximalen Abstand eines Datenpunkte des jeweiligen Clusters zu dessen Centroiden und/oder eine ähnliche Metrik charakterisiert werden.

Die hier vorgeschlagene Verwendung der Clusteranalyse erlaubt eine objektive und robuste Gruppierung der geometrischen Eigenschaften. Damit ist eine objektive und robuste Grundlage für die Bewertung der Bekanntheit gegeben, was gerade bei längeren oder komplizierteren Fahrstrecken ein bedeutender Vorteil gegenüber einer manuellen oder subjektiven Klassifizierung oder Bekanntheitsbewertung sein kann. Dies ist der Fall, da sich herausgestellt hat, dass eine manuelle oder subjektive Klassifizierung von Fahrstrecken hinsichtlich ihrer geometrischen Ähnlichkeit nach Augenmaß oftmals keine objektiv nachvollziehbaren robusten Ergebnisse zur Beurteilung der tatsächlichen Bekanntheit der jeweiligen Fahrstrecke, also der geometrischen Ähnlichkeit zu einer oder mehreren anderen Fahrstrecken, und somit letztlich zur Beurteilung der Performanz oder Generalisierbarkeit der Fahrassistenzeinrichtung oder eines für diese verwendeten Lernverfahrens ermöglicht.

In einer weiteren möglichen Ausgestaltung der vorliegenden Erfindung werden die geometrischen Eigenschaften in dem Eigenschaftsraum mittels einer iterativen Clusteranalyse gruppiert. Dabei werden iterativ Cluster und deren Clusterschwerpunkte, also Centroide, unter der Maßgabe einer Minimierung der mittleren Abstände der geometrischen Eigenschaften, also der entsprechenden Datenpunkte in dem Eigenschaftsraum, zu den Clusterschwerpunkten bestimmt. Dabei können beispielsweise in oder nach einem Durchlauf oder Iterationsschritt stück- oder fahrstreckenweise neue geometrische Eigenschaften, also Daten, berücksichtigt werden, die dann also in Relation zu den bis dahin bereits bestimmten Clustern bzw. Clusterschwerpunkten gesetzt werden können. Auf diese Weise kann nach und nach eine Verfeinerung der Cluster bzw. eine verfeinerte Bestimmung der Clusterschwerpunkte erreicht werden. Dadurch kann letztlich eine Robustheit der Bestimmung der Bekanntheit der jeweiligen anhand der Cluster bzw. Clusterschwerpunkte zu bewertenden Fahrstrecke verbessert werden. Mit anderen Worten kann so also eine besonders zuverlässige Zuordnung der geometrischen Eigenschaften der bekannten Fahrstrecken zu entsprechenden Clustern erreicht werden.

Dabei kann die Clusteranalyse und/oder das Bereitstellen der Vielzahl von Cluster nicht nur in einem vorangehenden Trainingsprozess bzw. Einlernprozess vorgenommen sondern auch während einer Fahrzeugführung des Fahrzeugs unter Verwendung der Fahrassistenzeinrichtung vorgenommen werden.

Bei einem weiter bevorzugten Verfahren wird zur Ermittlung der Steuergröße ein (insbesondere vorgegebener) Interaktionsumfang der Fahrassistenzeinrichtung zur Durchführen der Fahrzeugfunktion in Abhängigkeit der Unsicherheitsgröße verändert und/oder überprüft. Bei dem Interaktionsumfang kann es sich dabei um den Interaktionsumfang zur Ermittlung der Steuergröße handeln. Insbesondere kann der Interaktionsumfang angeben, bis zu welchem Grad bzw. um welchen Betrag die Fahrassistenzeinrichtung bzw. ein trainierbares Modell in das Fahrgeschehen eingreifen darf und/oder in die Fahrzeugfunktion eingreifen kann. Bevorzugt kann der Interaktionsumfang angeben, in welchem Umfang die Fahrassistenzeinrichtung (und/oder ein zugrundeliegendes trainierbares und/oder trainiertes Modell) die Umgebung erkunden ("explorieren") darf bzw. kann.

Bevorzugt kann in Abhängigkeit der Unsicherheitsgröße bewertet werden, ob ein der Fahrassistenzeinrichtung vorgegebener Interaktionsumfang der Unsicherheit bezüglich der zu bewertenden Fahrstrecke angemessen ist oder eingeschränkt werden soll. Dies bietet den Vorteil, dass etwa im Falle zu bewertender Fahrstrecken, bei denen eine größere Unsicherheit bezüglich deren Zuordnung (zu basierend aus bekannten Fahrstrecken gebildeten Clustern) angenommen wird, lediglich ein vorsichtiger Eingriff vorgenommen werden kann. Umgekehrt kann dagegen im Falle zu bewertender Fahrstrecken, bei denen eine sehr kleine Unsicherheit bezüglich deren Zuordnung (zu basierend aus bekannten Fahrstrecken gebildeten Clustern) angenommen wird, ein größerer Interaktionsumfang zur Durchführung der Fahrzeugfunktion zugelassen werden.

Der Interaktionsumfang kann sich insbesondere auf einen Aktionsraum der Fahrassistenzeinrichtung und/oder einem der Fahrassistenzeinrichtung zugrundeliegendes lernfähiges und/oder trainiertes Modell beziehen (beispielsweise auf einen Aktionsraum eines Agenten, insbesondere eines Reinforcement Learning Agenten, siehe auch nachfolgend beschrieben), aus welchem die Fahrassistenzeinrichtung und/oder das Modell (etwa der Reinforcement Learning Agent) eine Aktion zur Durchführung der Fahrzeugfunktion und/oder zur Ermittlung der Steuergröße auswählen kann oder auswählt.

Bei einem Agenten handelt es sich insbesondere um ein System, welches in einer Umgebung (etwa in der Umgebung des Fahrzeugs) agiert. Dabei werden in Bezug auf den Agenten unter dem Begriff "Umgebung" nicht zwingend die physikalischen Grenzen des Agenten bezeichnet sondern insbesondere alle Komponenten außerhalb der Entscheidungsfindung des Agenten. Dazu werden insbesondere eine sogenannte Policy ("Strategie" bzw. "Handlungsweise" des Agenten ausgehend von einem bestimmten Zustand) und eine sogenannte Value-Function approximiert. Lernt der Agent eine deterministische Policy, so liefert seine Policy eine explizite Aktion. Handelt der Agent nach einer stochastischen Policy, so liefert diese eine Verteilung über alle möglichen Aktionen basierend auf dem aktuellen Zustand. Der Aktionsraum beschreibt dabei den Raum aller möglichen Aktionen. Mithilfe einer vorgegebenen Funktion, der sogenannten Value-Function, bewertet der Agent seinen aktuellen Zustand bzw. das Wählen einer Aktion in diesem. Dabei wird insbesondere ausgegeben, wie hoch die zu erwartende Belohnung ("Reward") ausgehend von dem Zustand für den Agenten ist. Denkbar ist auch, dass der Agent bewertet, wie gut es ist in einem Zustand eine bestimmte Aktion zu wählen und anschließend seiner Policy zu folgen. Denkbar ist auch, dass der Agent zusätzlich ein Modell seiner Umgebung nutzt, um mithilfe von diesem Schlussfolgerungen über das Verhalten der Umgebung treffen zu können. Hierdurch wird vorteilhaft das Präzidieren des nachfolgenden Zustands oder des zu erwartenden Rewards für eine getätigte Aktion möglich. Unter Zustandsraum wird in Bezug auf den Agenten die Menge aller Zustände des Agenten bezeichnet.

Aufbauend auf die Verwendung des geometrischen Clustering als objektives Gütefunktional zur Beurteilung der Generalisierbarkeit eines trainierten und/oder lernfähigen Modells (etwa eines Reinforcement Agenten) wird nun vorteilhaft die Methode des Clusterings verwendet, um auf Basis von geometrischen Kenngrößen (bzw. von geometrischen Parametern) sowie Größen zur Beschreibung einer Trajektorie, namentlich das Geschwindigkeits- sowie das Beschleunigungsprofil, ein Konfidenzmaß über die Neuheit der vorliegenden Situation zu erhalten. Anhand dessen wird anschließend die Fahrassistenzeinrichtung und/oder das Modell und/oder etwa der Agent (etwa der Reinforcement Learning Agent) in seinem Interaktionsumfang verändert.

Bei einem weiter bevorzugten Verfahren wird die Unsicherheitsgröße in Bezug auf eine zukünftige (potentielle) Fahrstrecke als zu bewertende Fahrstrecke beurteilt. Mit anderen Worten wird eine Prädiktion der Unsicherheit bzw. der Unbestimmtheit in Bezug auf die zukünftige (potentielle) Fahrstrecke vorgenommen. Durch die Prädiktion der Unsicherheit bzw. der Unbestimmtheit von verschiedenen in der Zukunft liegenden Fahrsituationen kann beispielsweise die Durchführung der Fahrzeugfunktion beeinflusst werden, noch bevor diese Situation auftritt. Hierdurch kann eine optimierte Regelung erreicht werden, da ein verbesserter Signalverlauf erreicht werden kann.

In einer weiteren möglichen Ausgestaltung der vorliegenden Erfindung wird als die Fahrassistenzeinrichtung oder als Teil davon ein lernfähiges Modell, also eine Einrichtung des maschinellen Lernens, verwendet. Ein solches lernfähiges Modell kann beispielsweise mittels oder in Form eines künstlichen neuronalen Netzes realisiert werden.

Falls die jeweils bestimmte Bekanntheit der jeweils zu bewertenden Fahrstrecke kleiner als ein vorgegebener Schwellenwert ist, wird dann automatisch eine vorgegebene Sicherheitsfunktion der Fahrassistenzeinrichtung oder eines Trainingsmechanismus zum Trainieren des lernfähigen Modells aktiviert. Durch eine solche Sicherheitsfunktion kann bei entsprechend großem Abstand bzw. entsprechend kleinem Bekanntheitsgrad beispielsweise automatisch ein entsprechender datengetriebener Lernansatz für Fahrstrecken oder Streckenabschnitte mit entsprechend geringerer Bekanntheit verstärkt oder intensiver überwacht werden. In einem Trainingsprozess können dann beispielsweise vermehrt entsprechende Fahrstrecken oder Streckenabschnitte als Trainingsdaten verwendet oder ein jeweiliges Ergebnis bzw. die jeweilige Fahrstrecke zur manuellen Überprüfung markiert werden.

Im Betrieb eines mit der Fahrassistenzeinrichtung ausgestatteten Fahrzeugs kann beispielsweise eine Navigationsroute bzw. eine Trajektorie entlang zumindest eines Abschnitts einer Navigationsroute automatisch für eine anstehende Fahrt des Fahrzeugs bestimmt werden. Es kann dann in der beschriebenen Weise überprüft werden, ob bzw. in welchem Maße diese Navigationsroute bzw. die Trajektorie der Fahrassistenzeinrichtung bekannt ist. Ist die Bekanntheit kleiner als der vorgegebene Schwellenwert, kann die Sicherheitsfunktion automatisch aktiviert werden, um beispielsweise dennoch einen sicheren Betrieb des Fahrzeugs entlang der Navigationsroute zu ermöglichen. Dazu können beispielsweise Betriebsparameter des Fahrzeugs, wie etwa dessen maximale Geschwindigkeit, reduziert oder eingeschränkt werden, eine Eskalationsschwelle zum Einleiten vorgegebener, abgestuft stärker werdend in den Fahrbetrieb eingreifender Maßnahmen, herabgesetzt werden, zumindest stellenweise eine manuelle Fahrzeugsteuerung angefordert werden und/oder dergleichen mehr. Auch hierdurch kann basierend auf der bestimmten Bekanntheit die Sicherheit im Betrieb der Fahrassistenzeinrichtung verbessert werden.

In einer weiteren möglichen Ausgestaltung der vorliegenden Erfindung wird als die Fahrassistenzeinrichtung oder als Teil davon ein lernfähiges Modell, also eine Einrichtung des maschinellen Lernens, verwendet und dieses anhand von als Trainingsdaten vorgegebenen Fahrstrecken mittels bestärkenden Lernens (englisch: reinforcement learning) trainiert. Mit anderen Worten kann hier also ein vorgegebener sogenannter in Reinforcement-Learning-Agent verwendet werden, um die Fahrassistenzeinrichtung, beispielsweise für die automatisierte Fahrzeugführung, zu trainieren. Die als Trainingsdaten vorgegebenen Fahrstrecken können beispielsweise die bekannten Fahrstrecken sein oder diese umfassen. Für das bestärkende Lernen kann eine Belohnungsfunktion vorgegeben sein, durch die beispielsweise eine Maximierung der Performanz der Fahrassistenzeinrichtung belohnt wird. Insbesondere kann das lernfähige Modell bzw. die Fahrassistenzeinrichtung hier mittels bestärkenden Lernens trainiert werden. Dies ist hier ohne weiteres möglich, da die bestimmte Bekanntheit zu bewertender Fahrstrecken wie beschrieben eine robuste Möglichkeit oder Grundlage bietet, um die Generalisierungsfähigkeit der Fahrassistenzeinrichtung bzw. der verwendeten Trainingsmethode nachträglich oder zwischenzeitlich zu überprüfen. Somit kann durch die hier vorgeschlagene Ausgestaltung die Fahrassistenzeinrichtung besonders effektiv und effizient bereitgestellt werden, ohne eine verringerte Robustheit oder Sicherheit in Kauf zu nehmen.

Bei einem weiter bevorzugten Verfahren verwendet die Fahrassistenzeinrichtung einen Agenten, insbesondere einen Reinforcement-Learning Agenten, zur Ermittlung der Steuergröße, wobei der Agent zur Exploration einer Umgebung des Agenten, also zur Erforschung der Umgebung durch Aktionen abweichend der besten dem Agenten bekannten Aktionen, geeignet und bestimmt ist, wobei die Exploration, insbesondere eine Explorationsrate und/oder eine Entscheidung über eine weitere Exploration, in Abhängigkeit der Unsicherheitsgröße durchgeführt wird. Bevorzugt ermittelt der Agent die Steuergröße. Hierdurch kann langfristig ein größerer Reward ("Belohnung") erhalten werden und zugleich eine größtmögliche Fahrsicherheit erreicht werden.

Durch die Prädiktion der Unsicherheit bzw. der Unbestimmtheit von verschiedenen, in der Zukunft liegenden Fahrsituationen kann die Explorationsrate beeinflusst werden, noch bevor diese Situation auftritt. Dies hat vor allem Vorteile aus regelungstechnischer Sicht, da ein verbesserter Signalverlauf erreicht werden kann. Somit kann in sicherheitskritischen Fahrmanövern die Exploration frühzeitig eingeschränkt werden, so dass es zu keiner Gefahrensituation durch zusätzliche Exploration kommen kann.

Bevorzugt erkundet der Agent im Allgemeinen seine Umgebung, um eine bessere Bewertung des Zustandsraums vornehmen zu können. Eine Exploration in Abhängigkeit der Unsicherheitsgröße kann durch den informativen Mehrwert dabei zur Verbesserung beitragen. Damit kann erreicht werden, dass der Agent seine Wahl der Aktion (bzw. insbesondere seine Wahl des bzw. eines Explorationsbetrags) in Abhängigkeit der Unsicherheit der aktuellen Fahrsituation trifft. So könnte beispielsweise bei einer als unsicher beurteilte Einordnung der zu bewertenden Fahrstrecke zunächst ein vergleichsweise kleinerer Explorationsbetrag gewählt werden, während beispielsweise bei einer mit geringerer Unsicherheit behafteten Einordnung der zu bewertenden Fahrstrecke ein vergleichsweise größerer Explorationsbetrag gewählt werden könnte.

Bei einem weiter bevorzugten Verfahren wird auf Grundlage der Unsicherheitsgröße beurteilt, wann eine Exploration erforderlich ist. Viele wissenschaftliche Arbeiten zu Explorationsstrategien beschäftigen sich mit der Frage, welche Aktion exploriert werden soll (Garcia, Francisco M., and Philip S. Thomas. "A meta-MDP approach to exploration for lifelong reinforcement learning." arXiv preprint arXiv:1902.00843 (2019)) aber nicht, wann exploriert werden soll und wann nicht. Letzteres steht jedoch in direktem Zusammenhang mit dem Bereich des "Live-long-learnings". Eine Konvergenz der Explorationsrate im Falle deterministischer Methoden ist ebenfalls für die Konvergenz der Algorithmik notwendig, so dass nicht fortlaufend beliebig exploriert werden kann. In Bereichen, in denen jedoch der Zustandsraum noch nicht ausreichend erkundet ist oder in neuen Fahrsituationen ist aber eine weitere Exploration durchaus erwünscht. Damit bietet das vorgeschlagene Verfahren (insbesondere durch Berücksichtigung der Unsicherheitsgröße) eine Metrik zur Bestimmung, wann weiter Exploration stattfinden soll und wann nicht. Diese kann vorteilhaft das Problem der Konvergenz adressieren und gleichzeitig mit neuen Fahrsituationen, sich ändernden Fahrzeugeigenschaften oder Kundenwünschen umgehen.

Als Metrik zur Bestimmung eines Explorationsbetrags bzw. zu einer Aussage bezüglich eines Explorationsbetrages kann dabei beispielsweise ein Abstand zum Zentrum des Clusters (der jeweiligen Datenpunkte eines Streckenabschnitts der zu bewertenden Fahrstrecke) und/oder dem zeitlichen Verlauf fahrdynamischer Kenngrößen (wie der Geschwindigkeit und/oder Beschleunigung) und/oder der Bestimmtheit bzw. Unsicherheit des Agenten in der jeweiligen Fahrsituation verwendet werden.

Die Ermittlung der Bestimmtheit bzw. Unsicherheit des Agenten (bzw. der Unsicherheitsgröße) kann dabei bevorzugt mit bayesschen Ansätzen kombiniert werden.

Alternativ oder zusätzlich kann die Metrik und/oder die ermittelte Unsicherheitsgröße zum Treffen einer Entscheidung über weitere Exploration ("Live-Long-Learning") verwendet werden. Beispielsweise wenn die Unsicherheit in gewissen Bereichen hoch ist und eine weitere Exploration hier keine Sicherheitsbedenken aufwirft, kann sich für eine weitere Exploration entschieden werden.

Bei einem weiter bevorzugten Verfahren wird zur Ermittlung der Unsicherheitsgröße eines bestimmten Streckenabschnitts der zu bewertenden Fahrstrecke eine Korrelation wenigstens eines Teils der Verlaufsdaten in Bezug auf den Streckenabschnitt und dem zugeordneten Cluster ermittelt. Damit kann insbesondere mit anderen Worten beurteilt werden, wie ähnlich der jeweilige Streckenabschnitt zu den bereits bekannten Fahrstrecken ist. Weiterhin ist eine abschnittsweise Beurteilung der jeweiligen Unsicherheit und damit eine lokal präzise Prädiktion oder Beurteilung der Unsicherheit entlang der Fahrstrecke möglich ist.

Bei einem weiter bevorzugten Verfahren ist und/oder wird für jeden Cluster ein Clusterschwerpunkt bestimmt und bei der Ermittlung der Unsicherheitsgröße wird wenigstens der Clusterschwerpunkt des den zu bewertenden Verlaufsdaten zugeordneten Clusters berücksichtigt. Hierdurch kann vorteilhaft eine Metrik gebildet werden, in welcher der Abstand der zu bewertenden Datenpunkte (der Verlaufsdaten) zu den jeweiligen Clusterschwerpunkten bestimmt werden und somit in zeiteffizienter Weise eine Korrelation zu den bereits bekannten Datenpunkten (etwa aus den bekannten Fahrstrecken) ermittelt werden. Der Abstand zu einem Clusterschwerpunkt stellt dabei in vorteilhafter Weise ein aussagekräftiges Maß der Sicherheit bzw. einer Konfidenz der Zuordnung zu dem jeweiligen Cluster dar.

Bei einem weiter bevorzugten Verfahren wird die Unsicherheitsgröße basierend auf einer (insbesondere) relativen Distanzmetrik auf Grundlage einer Anordnung wenigstens eines Teils der Verlaufsdaten in Bezug auf eine Anordnung wenigstens eines Clusterschwerpunkts eines Clusters in einem durch die vorgegebenen geometrischen Parameter aufgespannten Eigenschaftsraum ermittelt. Bevorzugt wird als Metrik zur Ermittlung der Unsicherheitsgröße eine für einen Abstand wenigstens eines Datenpunkts der Verlaufsdaten in Bezug auf den Streckenabschnitt und einem Clusterschwerpunkt des dem Streckenabschnitt zugeordneten Clusters charakteristische Größe verwendet, wobei der Abstand in einer Darstellung in einem durch die vorgegebenen geometrischen Parameter aufgespannten Eigenschaftsraum ermittelt wird. Dabei kann es sich bei der Distanzmetrik um eine normierte Distanzmetrik handeln.

Während des Trainings eines Agenten und/oder eines Modells werden die genutzten Trainingsdaten zur Bestimmung von Centroiden der Cluster herangezogen. Für neue Strecken bzw. für die zu bewertende Fahrstrecke findet insbesondere anschließend eine Zuordnung neuer Datenpunkte zu den zuvor bestimmten Centroiden statt. Über die Distanz (siehe obig auch als Abstand bezeichnet) des jeweiligen Datenpunktes zu dem zugeordneten Centroiden sowie der mittleren Distanz in diesem Cluster kann eine Unsicherheit ("Uncertainty") des Datenpunktes bestimmt werden.

Anhand dieser Unsicherheit ("Uncertainty") kann im Bereich kritischer Fahrsituationen (hohe Querbeschleunigung und Regelaktivität) das Stellsignal des Agenten proportional zur Uncertainty reduziert werden.

Bei einem weiter bevorzugten Verfahren wird eine Fahrsituation des Fahrzeugs in Bezug auf eine Fahrzeugstabilität und/oder Fahrsicherheit bewertet und in Abhängigkeit hiervon sowie in Abhängigkeit von der Unsicherheitsgröße die Steuergröße ermittelt. Beispielsweise wird die Fahrzeugstabilität und/oder Fahrsicherheit auf das Auftreten kritischer Fahrsituationen wie beispielsweise eine hohe Querbeschleunigung und/oder Regelaktivität hin beurteilt. Die Steuergröße kann in Abhängigkeit der Unsicherheitsgröße erhöht oder verringert werden. Dabei kann die Steuergröße in Abhängigkeit der Unsicherheitsgröße im Verhältnis zu dieser (etwa proportional zu dieser) verringert werden.

Damit ergibt sich vorteilhaft ein geringer Eingriff in Situationen, in denen keine kritischen Fahrsituationen auftreten sowie in denen die Unsicherheit ("Uncertainty") gering ist.

Aufgrund von Ungenauigkeiten in Systemmodellen und überwiegend auch äußeren, sich oftmals und dynamisch ändernden Störeinflüssen sowie komplexen Fahrsituationen werden bevorzugt adaptive Regelungsverfahren zur Durchführung der Fahrzeugfunktion eingesetzt. Hierdurch kann eine kontinuierliche hohe Regelgüte garantiert werden.

Bei einem weiter bevorzugten Verfahren ist die Steuergröße charakteristisch für eine Stellgröße in einem adaptiven Regelverfahren zur Durchführung der Fahrzeugfunktion. Damit kann vorteilhaft die Unsicherheitsabschätzung bzw. die Ermittlung der Unsicherheitsgröße als Sicherheitsaspekt für mögliche Eingriffe auf das Stellverhalten eines Reinforcement Learning Agenten in adaptiven Regelstrategien verwendet werden.

Der Reinforcement-Agent kann die komplette Regelung übernehmen. Bevorzugt ist aber auch möglich, dass der Reinforcement-Agent als additives Stellglied verwendet wird. Dies bietet den Vorteil, dass beispielsweise eine modellbasierte Steuerung (bzw. Regelungskomponente) mittels einer durch den Reinforcement Learning Agenten realisierten zusätzlichen Steuerung (bzw. Regelungskomponente) kombiniert werden kann. Hierdurch kann eine robustere Fahrzeugregelung erreicht werden.

Bei einem weiter bevorzugten Verfahren werden Streckendaten und/oder Verlaufsdaten identifiziert, welche nicht eindeutig einem Cluster zuordenbar sind und/oder deren Korrelation zu einem zugeordneten Cluster lediglich gering ist. Insbesondere wird auf Grundlage der identifizierten Streckendaten und/oder Verlaufsdaten ein weiterer Trainingsprozess des lernfähigen Modells und insbesondere des Reinforcement Learning Agenten durchgeführt.

Die Einordnung von bereits bekannten Datenpunkte in sogenannte Cluster wird bevorzugt genutzt, um sogenannte "White Spots" zu detektieren. Bei "White Spots" handelt es sich um Untermengen neuer Datenwolken, welche entweder nicht eindeutig einem Cluster zugeordnet werden können oder nur eine sehr geringe Korrelation zu einem Cluster haben. Diese Information wird anschließend bevorzugt in einem Reinforcement Learning Framework zum gerichteten Nachtraining eines Agenten genutzt.

Somit kann entweder die Exploration in ihrer Rate, wie obig beschrieben, basierend auf den Informationen verändert werden, um damit eine erhöhte Fahrsicherheit trotz möglicher Exploration zu erlangen oder der Agent in seiner Stellaktivität eingeschränkt werden. Außerdem kann eine Beurteilung der Notwendigkeit eines Nachtrainings stattfinden ("Live-long-learning").

Bei einem weiter bevorzugten Verfahren verwendet die Fahrassistenzeinrichtung ein lernfähiges Modell und ein weiterer Trainingsprozess (des lernfähigen Modells) wird in Abhängigkeit von der Unsicherheitsgröße initiiert oder angeregt. Insbesondere kann die Unsicherheit ("Uncertainty") genutzt werden, um im weiteren Trainingsverlauf bzw. Trainingsprozess Situationen, in denen aufgenommene Datenpunkte neue Bereiche des Zustandsraums (des Agenten) abdecken, zu berücksichtigen und die Explorationsrate zu erhöhen. Somit kann vorteilhaft eine Entkopplung der zeitlichen Komponente in der Explorationsrate stattfinden.

Bevorzugt wird der weitere Trainingsprozess in Abhängigkeit der Streckendaten und/oder Verlaufsdaten vorgenommen, welche als nicht eindeutig einem Cluster zuordenbar und/oder eine geringe Korrelation zu einem zugeordneten Cluster aufweisend identifiziert wurden. Damit kann ein gerichtetes und hierdurch effizienteres Nachtraining erfolgen.

Ein bekanntes Problem bei Reinforcement Learning ist dabei das Verhältnis zwischen Exploration und Exploitation, in welchem die aktuelle Policy des Agenten entweder evaluiert werden muss oder eine weitere Erkundung des Zustandsraums stattfinden soll. Wird dauerhaft erkundet, kann die aktuelle Policy nur bedingt bewertet werden. Bei zu wenig Exploration bleiben mögliche Orte im Zustandsraum unerkundet, wodurch mögliche bessere Systemzustände nicht offengelegt werden.

Durch gerichtetes Nachtraining in Abhängigkeit der Unsicherheit der Datenpunkte bezüglich deren Zuordnung zu einem Cluster kann damit ein gezieltes Erkunden bisher unbekannter Zustände in dem Zustandsraum erreicht werden.

Bevorzugt basiert das lernfähige und/oder trainierte Modell und insbesondere der Reinforcement Learning Agent auf einer deterministischen gelernten Strategie (engl. "Policy").

Alternativ können ebenfalls stochastische Policies für diesen Anwendungsfall genutzt werden, da diese durch das Modellieren einer Wahrscheinlichkeitsverteilung abhängig von dem Zustandsraum die Uncertainty ("Unsicherheit") intrinsisch aufnehmen. Stochastische Policies sind in diesem Anwendungsfall langsamer in der Konvergenz und eignen sich ebenfalls nicht zur Nutzung von Deep Deterministic Policy Gradient, dem bevorzugt gewählten Algorithmus zum Training des Agenten. Dieser Algorithmus setzt eine deterministische Policy mit einem zusätzlichen Explorationsfunktional voraus.

Das erfindungsgemäß vorgeschlagene Verfahren bietet den Vorteil, dass durch Entkopplung der Uncertaintybestimmung bzw. der Ermittlung der Unsicherheitsgröße von der eigentlichen Policy, der gelernten Strategie, (im Falle stochastischer Policies) eine Prädiktion der Unsicherheit bzw. der Unsicherheitsgröße ("Uncertainty") stattfinden kann (insbesondere sofern alle Eingangsgrößen dafür bestimmt werden (können)). Im Falle des Heranziehens von Planungsgrößen sind diese mit einer gewissen zeitlichen Vorausschau bekannt und können somit zur a priori Bestimmung der Uncertainty bzw. der Unsicherheitsgröße herangezogen werden. Dies ermöglicht eine stetigere Veränderung des Stellsignals, welches vorteilhaft für das zugrundeliegende Regelungssystem (zur Durchführung der Fahrzeugfunktion) ist.

Bevorzugt ist die Fahrassistenzeinrichtung ausgewählt aus einer Gruppe, die (wenigstens) ein Längsführungssystem, beispielsweise ACC (Abkürzung für automatic cruisse control), ein Querführungssystem, ein Spurmittenführungssystem, ein ESC-System (Elektronische Stabilitätskontrollsystem), ABS (Antiblockiersystem), ein Ausweich-Assistenzsystem, ein Notbrems-Assistenzsystem, ein Spurverlassen-Warnsystem, ein Müdigkeits-Warnsystem und dergleichen sowie Kombinationen hiervon umfasst.

Bei der Fahrerassistenzeinrichtung kann es sich (jeweils) um ein wenigstens teilautomatisch fahrübernahmebereites System handeln. Denkbar ist auch, dass es sich um eine Fahrassistenzeinrichtung handelt, welche wenigstens zeitweise dazu geeignet (und bestimmt) ist, eine (insbesondere unabhängige) Fahrzeugführung (insbesondere innerhalb definierter Grenzen, beispielsweise als Stauassistent zum Abnehmen der Längsführung bezüglich des Vorderfahrzeugs als auch die Querführung innerhalb der eigenen Spur im Stau) vollständig zu übernehmen. Denkbar ist auch, dass die Fahrassistenzeinrichtung zur Übernahme der kompletten Fahraufgabe, insbesondere einer Längs- und Querführung, (über einen längeren Zeitraum) - insbesondere unabhängig von dem derzeitigen Fahrszenario - geeignet und bestimmt ist.

Die Fahrzeugfunktion kann eine Funktion einer Fahrzeugkomponente des Fahrzeugs sein, zum Beispiel eine Wahrnehmungsfunktion für mindestens ein Fahrerassistenzsystem. Vorzugsweise ist die Fahrzeugkomponente aus einer Gruppe ausgewählt, die ein System zum (insbesondere automatisierten und/oder teilautomatisierten) Fahren und/oder Steuern des Fahrzeugs, ein Fahrerassistenzsystem, ein Navigationssystem, ein Warnsystem, ein Fahrzeugsicherheitssystem (z. B. ein Bremssystem) oder dergleichen sowie Kombinationen davon.

In einer weiteren möglichen Ausgestaltung der vorliegenden Erfindung wird mittels der Fahrassistenzeinrichtung ein Fahrzeug zumindest teilweise autonom oder automatisiert entlang der jeweiligen zu bewertenden Fahrstrecke geführt. Eine dabei erreichte Performanz der Fahrassistenzeinrichtung wird dann bevorzugt mit der für diese Fahrstrecke bestimmten Bekanntheit kombiniert, also beispielsweise gewichtet, um die Generalisierbarkeit oder Generalisierungsfähigkeit der Fahrassistenzeinrichtung zu bestimmen oder zu beurteilen. Mit anderen Worten wird hier also bestimmt, wie gut die Fahrassistenzeinrichtung mit unbekannten, also neuen Fahrstrecken oder Situationen zurechtkommt. Die Bekanntheit der jeweiligen zu bewertenden Fahrstrecke für die Fahrassistenzeinrichtung kann also als Konfidenzmaß für die Fahrassistenzeinrichtung dienen bzw. verwendet werden. Aus der Bekanntheit bzw. dem Konfidenzmaß und der Performanz der Fahrassistenzeinrichtung entlang der zu bewertenden Fahrstrecke kann dann in vorgegebener Weise ein Maß zur Beurteilung eine Robustheit oder Zuverlässigkeit der Fahrassistenzeinrichtung bezüglich der automatisierten Fahrzeugführung auf unbekannten Strecken, also zur Beurteilung der Generalisierbarkeit oder Generalisierungsfähigkeit der Fahrassistenzeinrichtung, gebildet werden.

Die Performanz kann dabei für die gesamte zu bewertende Fahrstrecke insgesamt oder für individuell für die an anderer Stelle genannten, zu den Clustern korrespondierenden Streckenabschnitte oder für entsprechende oder individuelle Fahrmanöver des durch die Fahrassistenzeinrichtung geführten Fahrzeugs entlang der jeweiligen zu bewertenden Fahrstrecke bestimmt werden. Durch die hier vorgeschlagene Kombination der Bekanntheit und der erreichten Performanz kann berücksichtigt werden, dass auf einer zwar neuen aber den bekannten Fahrstrecken relativ ähnlichen Fahrstrecke grundsätzlich mit einer höheren Performanz der Fahrassistenzeinrichtung gerechnet werden kann als auf neuen Fahrstrecken, die eine geringere Bekanntheit aufweisen, sich also stärker von den der Fahrassistenzeinrichtung bereits bekannten Fahrstrecken unterscheiden. Eine solche höhere Performanz auf einer relativ bekannten neuen Fahrstrecke macht dementsprechend eine weniger belastbare oder aussagekräftige Angabe zur Generalisierbarkeit der Fahrassistenzeinrichtung. Dementsprechend kann die Performanz auf Fahrstrecken mit größerer Bekanntheit für die Beurteilung der Generalisierbarkeit relativ untergewichtet werden. Andererseits kann eine gegebenenfalls sogar relativ schlechte Performanz auf einer bestimmten Fahrstrecke dennoch für eine relativ gute Generalisierbarkeit der Fahrassistenzeinrichtung sprechen, wenn diese Fahrstrecke eine sehr geringe Bekanntheit für die Fahrassistenzeinrichtung aufweist. Dementsprechend kann die Performanz auf Fahrstrecken mit kleinerer Bekanntheit für die Beurteilung der Generalisierbarkeit relativ übergewichtet werden. Durch die hier vorgeschlagene Ausgestaltung der vorliegenden Erfindung kann somit auf besonders robuste Weise die Generalisierbarkeit bzw. Generalisierungsfähigkeit der Fahrassistenzeinrichtung bestimmt werden.

In einer möglichen Weiterbildung der vorliegenden Erfindung werden die Performanzen der Fahrassistenzeinrichtung für mehrere zu bewertende Fahrstrecken bestimmt und zum Bestimmen der Generalisierungsfähigkeit der Fahrassistenzeinrichtung kombiniert. Dabei werden die Performanzen in Abhängigkeit von der bestimmten Bekanntheit der jeweiligen Fahrstrecke gewichtet. Die Performanzen der Fahrassistenzeinrichtung für eine Fahrstrecke mit geringerer Bekanntheit, also die Performanz der Fahrassistenzeinrichtung beim Führen des Fahrzeugs auf Fahrstrecken, deren geometrische Eigenschaften einen größeren Abstand zu den geometrischen Eigenschaften der bekannten Fahrstrecken aufweisen, wird dabei übergewichtet. Die Performanz für Fahrstrecken mit kleinerem Abstand, also größerer Bekanntheit und damit also größerer objektiver geometrischer Ähnlichkeit zu den bekannten Fahrstrecken wird hingegen untergewichtet. Durch die Bewertung der Generalisierungsfähigkeit auf Grundlage der Performanzen der Fahrassistenzeinrichtung auf mehreren zu bewertenden, also potenziell unbekannten, Fahrstrecken und die beschriebene Gewichtung wird eine noch genauere, robustere und zuverlässigere Bestimmung der Generalisierungsfähigkeit der Fahrassistenzeinrichtung ermöglicht. Dies kann insbesondere der größeren Datenbasis geschuldet sein, da mehrere Fahrstrecken eine größere Wahrscheinlichkeit dafür bieten, dass die Fahrassistenzeinrichtung mit tatsächlich unbekannten Merkmalen, geometrischen Eigenschaften oder Streckenverläufen konfrontiert wird.

Die vorliegende Erfindung ist weiterhin gerichtet auf eine elektronische Recheneinrichtung für eine Fahrassistenzeinrichtung und/oder eine, insbesondere Prozessor-basierte, Fahrassistenzeinrichtung für ein Fahrzeug zum Durchführen einer wenigstens teilautomatischen Fahrzeugfunktion, insbesondere einer Fahrfunktion, eines Fahrzeugs in Abhängigkeit von einer zu bewertenden Fahrstrecke, welche zur Durchführung folgender Computer-implementierter Verfahrensschritte geeignet und bestimmt und/oder konfiguriert ist:
- Bereitstellen einer Vielzahl von Cluster aus Streckendaten in Bezug auf wenigstens eine bekannte Fahrstrecke, wobei die Cluster die Streckendaten abschnittsweise gemäß vorgegebener geometrischer Parameter gruppieren;
- Ermitteln von, insbesondere mittels einer Sensoreinrichtung erfassten, Verlaufsdaten, die einen Verlauf der zu bewertenden Fahrstrecke angeben und Anwenden der Cluster auf die zu bewertenden Verlaufsdaten, um die zu bewertende Fahrstrecke in zu den Clustern korrespondierende Streckenabschnitte aufzuteilen und hierdurch den einzelnen Streckenabschnitten jeweils einen Cluster zuzuordnen;
- Ermitteln wenigstens einer Unsicherheitsgröße, die charakteristisch ist für eine Unsicherheit in Bezug auf die vorgenommene Zuordnung zwischen wenigstens einem der Streckenabschnitte und dem diesem Streckenabschnitt zugeordneten Cluster;
- Ermitteln einer Steuergröße in Abhängigkeit der Unsicherheitsgröße und Bereitstellen der Steuergröße zur Durchführung der Fahrzeugfunktion.

Es wird also auch im Rahmen der erfindungsgemäßen Fahrassistenzeinrichtung vorgeschlagen, dass eine Unsicherheitsgröße zur Analyse der Unsicherheit der Fahrassistenzeinrichtung bei der Bewertung der (unbekannten bzw. neuen) zu bewertenden Fahrstrecke bei der Ermittlung der Steuergröße berücksichtigt wird.

Unter einem (insbesondere obig oder nachfolgend aufgeführten) externen Server ist insbesondere ein in Bezug auf das Fahrzeug externer Server, insbesondere ein Backend-Server, zu verstehen. Der externe Server ist beispielsweise ein Backend eines Fahrzeugherstellers oder eines Dienstanbieters. Die Funktionen des Backend bzw. des externen Servers können dabei auf (externen) Serverfarmen durchgeführt werden. Beim (externen) Server kann es sich um ein verteiltes System handeln. Der externe Server und/oder das Backend kann Cloud-basiert sein.

Bevorzugt umfasst die, insbesondere Prozessor-basierte, Fahrassistenzeinrichtung die elektronische Recheneinrichtung. Denkbar ist aber auch, dass die Fahrassistenzeinrichtung in Kommunikationsverbindung (zum Datenaustausch) mit der elektronischen Recheneinrichtung steht und die elektronische Recheneinrichtung in Form eines externen Servers (und/oder eines verteilten Systems), beispielsweise als Backend-Server, bereitgestellt ist.

Die vorliegende Erfindung ist weiterhin gerichtet auf ein Fahrzeug, insbesondere Kraftfahrzeug, umfassend ein obig beschriebenes Fahrassistenzeinrichtung für ein Fahrzeug entsprechend einer Ausführungsform. Bei dem Fahrzeug kann es sich insbesondere um ein (motorisiertes) Straßenfahrzeug handeln.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Bevorzugt handelt es sich bei dem Fahrzeug um ein Fahrzeug aus dem Transportsektor. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung ist weiterhin gerichtet auf ein Computerprogramm oder Computerprogrammprodukt, umfassend Programmmittel, insbesondere einen Programmcode, welcher zumindest einige der und bevorzugt alle Verfahrensschritte des erfindungsgemäßen Verfahrens und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Die vorliegende Erfindung wurde in Bezug auf ein Fahrzeug und eine Fahrassistenzeinrichtung für ein Fahrzeug beschrieben. Das Verfahren kann aber auch außerhalb der Automobilbranche für Sicherheitsfunktionen bei Verfahren zur automatischen oder teilautomatischen Durchführung von Funktionen insbesondere bei der Verwendung von Reinforcement Learning-Agenten angewandt werden und hierauf in Bezug auf eine Bestimmung der Explorationsrate und/oder eines Explorationsbetrags und/oder einer weiteren Exploration und/oder eines gerichteten Nachtrainings (jeweils in Abhängigkeit einer in analog zu obigen Ausführungsformen auf Grundlage der Trainingsdaten und/oder Verlaufsdaten ermittelten Unsicherheitsgröße) übertragen werden. Die Anmelderin behält sich vor, ein hierauf gerichtetes Verfahren und eine Assistenzeinrichtung ebenfalls zu beanspruchen.

Weitere Vorteile und Ausführungsformen ergeben sich aus den beigefügten Zeichnungen:
Darin zeigen:
- Fig. 1: eine schematische Übersichtsdarstellung zur Veranschaulichung einer Anwendung eines geometrischen Clusterings auf eine Fahrstrecke;
- Fig. 2: eine beispielhafte Veranschaulichung zur Ableitung einer Aussage bezüglich eines Explorationsbetrags durch das vorgeschlagene Verfahren gemäß einer Ausführungsform;
- Fig. 3: eine schematische Übersichtsdarstellung zur sicheren Exploration und einem lebenslangen Lernen, welches durch das erfindungsgemäße Verfahren gemäß einer Ausführungsform vorgeschlagene Clustering und einer Unsicherheits-Bewertung erreicht werden kann;
- Fig. 4: eine schematische Übersichtsdarstellung zur Anwendung der geometrisch bestimmten Cluster auf eine neue Fahrstrecke;
- Fig. 5: eine schematische Übersichtsdarstellung zur Veranschaulichung einer Bewertung einer Bekanntheit einer Fahrstrecke auf Basis des geometrischen Clusterings;
- Fig. 6: eine Anwendung eines trainierten Reinforcement Learning Agenten;
- Fig. 7: eine Darstellung des Verlaufs der Unsicherheit über den Streckenmeter;
- Fig. 8: eine Darstellung eines Regelsignals des Agenten über den Streckmeter im Vergleich einer Berücksichtigung der Unsicherheit;
- Fig. 9: eine Darstellung einer Querablage über den Streckenmeter im Vergleich einer Berücksichtigung der Unsicherheit; und
- Fig. 10: eine Darstellung einer Regelaktivität über den Streckenmeter im Vergleich einer Berücksichtigung der Unsicherheit.

Gleiche oder funktionsgleiche Elemente sind in den Figuren mit den gleichen Bezugszeichen versehen.

Maschinelle Lernverfahren sowie datengetriebene Methoden ermöglichen basierend auf bereits gesehenen Szenarien oder Situation eine effiziente Abbildung mit der Möglichkeit der Interpolation zwischen bekannten Szenarien. Für viele Methoden stellt eine Extrapolation auf neue Szenarien, auch gefasst unter dem Begriff der Generalisierbarkeit der Methode, jedoch ein Problem dar. Im Bereich von Fahrmanövern ist es aber nicht immer trivial zu unterscheiden, wann es sich um eine Interpolation bereits bekannter Fahrmanöver oder Streckenabschnitte handelt und wann extrapoliert wird. Eine Metrik, welche die Bekanntheit, also die Neuheit einer neuen Strecke oder einzelner Streckenabschnitte aus Sicht beispielsweise einer Fahrassistenzeinrichtung zur Fahrzeugführung entlang der neuen Strecke bewertet, kann mit den Daten bereits bekannter Strecken zu einer besseren Einordnung von Ergebnissen der Fahrassistenzeinrichtung, also deren Performanz entlang der jeweils neuen Strecke führen.

Die Fahrassistenzeinrichtung kann beispielsweise mittels bestärkenden Lernens trainiert werden oder sein, in dem ein vorgegebener Agent seine Umgebung erkundet und anhand der beobachteten Szenarien, also der bekannten Strecken oder Fahrmanöver, eine optimierte Handlung, beispielsweise zum Führen des eines Fahrzeugs entlang einer Strecke, erlernt. Solche Handlungen oder Aktionen können beispielsweise eine Anpassung von Lenkwinkeln und Geschwindigkeiten bei der automatischen Fahrt, also Aktionen zur Quer- und Längsführung des Fahrzeugs sein oder umfassen. Da dies typischerweise datenineffizient ist, also eine Vielzahl an entsprechend präparierten Daten benötigt werden, um die Handlungen des Agenten zu optimieren, findet oftmals eine erste Auswertung bzw. ein Erlernen der Strecken oder Szenarien bzw. dafür geeigneter Handlungen auf Simulationsebene statt. Den Übertrag von einer solchen Simulation in die Realität sowie von dann bekannten Strecken oder Fahrmanövern auf unbekannte Strecken oder Fahrmanöver gilt es anschließend zu evaluieren. Hierbei ist eine Konfidenzbewertung bezüglich der Bekanntheit zur Bewertung von Handlungen, also letztlich der Performanz des Agenten als qualitative Einordnung nützlich, da somit die Güte des Agenten besser bewertet werden kann.

Bisherige Ansätze fokussieren sich oftmals darauf, entweder die Performanz des Agenten bzw. einer von diesem gelernten Strategie (englisch: Policy) für unbekannte Szenarien, hier also unbekannte Fahrstrecken oder Streckenabschnitte, zu evaluieren oder die Varianz einer jeweiligen Umgebung und daraufhin die Performanz einer vortrainierten Strategie zu untersuchen. Somit werden entweder Szenarien oder ein zugrundeliegendes Markow-Entscheidungsproblem variiert. Dabei besteht der Nachteil, dass lediglich das Ergebnis, also die Performanz des Agenten, betrachtet wird, jedoch keine Aussage getroffen wird, in welchem Verhältnis diese Performanz zum jeweiligen Szenario steht, wie diese Performanz also zu bewerten ist oder welche Aussagekraft diese Performanz besitzt. Besitzen neue, vermeintlich unbekannte Szenarien nur eine relativ geringe Abweichung von während eines Trainings des Agenten präsentierten Szenarien, so relativiert dies die Performanz des Agenten, also eine entsprechende Generalisierbarkeit. Bekannten Lösungen werden zudem oftmals in simulativen Frameworks eingesetzt und benötigen in der Realität zuerst experimentell ermittelte Daten. Zudem ist bei bisherigen Ansätzen oftmals eine Aussage über die Generalisierbarkeit erschwert, da entweder durch eine Verteilungsverschiebung im Zustandsraum die Performanz schlecht sein kann, da dann das zugrundeliegende Markow-Entscheidungsproblem verändert ist, oder durch die Abdeckung des Zustandsraums im Allgemeinen.

Nachfolgend wird hingegen ein Verfahren beschrieben, das a priori bereits eine Bewertung eines Zustandsraums, also etwa gegebener geometrische Daten oder Eigenschaften einer neuen Fahrstrecke, vornehmen kann, was unter Umständen direkt in einer experimentellen Ermittlung entsprechender Daten mitangewendet werden kann.

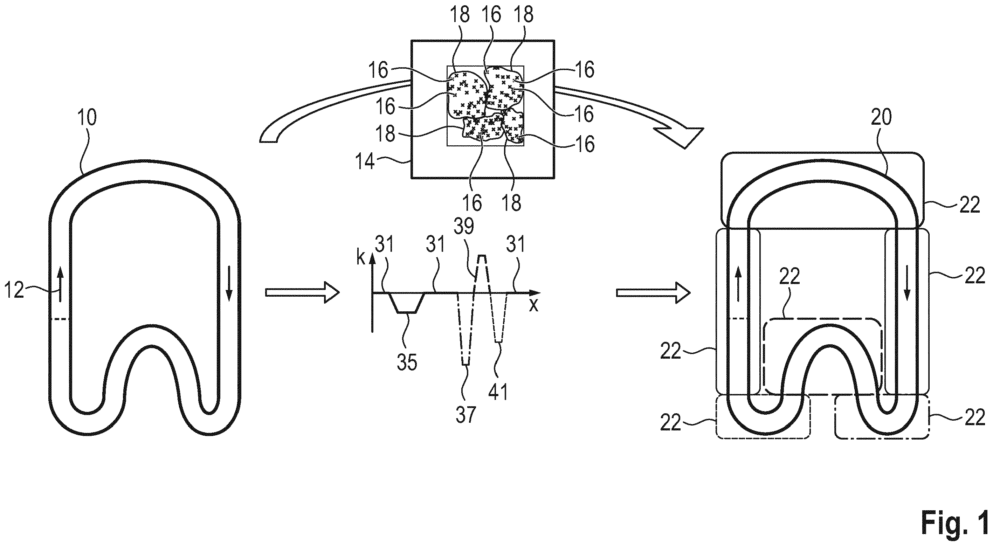

Dazu zeigt Fig. 1 eine schematische Übersichtsdarstellung, in der unter anderem eine Trainingsstrecke 10 schematisch dargestellt ist. Diese Trainingsstrecke 10 kann von einem Kraftfahrzeug in einer bestimmten Trainingsfahrtrichtung 12 befahren werden. Dabei werden entlang der Trainingsstrecke 10 an einer Vielzahl von Messpunkten Streckendaten 14 der Trainingsstrecke 10 erfasst, die geometrische Eigenschaften als Werte vorgegebener geometrische Parameter angeben. Die Trainingsstrecke 10 kann hier stellvertretend für eine Vielzahl von weiteren Fahrstrecken stehen, die wie die Trainingsstrecke 10 zum Trainieren einer Fahrassistenzeinrichtung bzw. eines lernfähigen Modells einer Fahrassistenzeinrichtung, beispielsweise zur automatisierten Fahrzeugführung, verwendet werden können.

Die Streckendaten 14 sind hier schematisch repräsentiert durch an den einzelnen Messpunkten entlang der Trainingsstrecke 10 aufgenommene Geometriewerte 16, von denen der Übersichtlichkeit halber hier nur einige explizit gekennzeichnet sind. Die Geometriewerte 16 sind dabei in einen hier ebenfalls nur schematisch angedeuteten, durch die vorgegebenen geometrischen Parameter aufgespannten Eigenschaftsraum eingetragen. Auf die Streckendaten 14 bzw. die Geometriewerte 16 wird dann eine Clusteringmethode angewendet, wodurch Cluster 18 basierend auf der Geometrie der beiliegenden Trainingsstrecke 10 gebildet werden.

Zur weiteren Veranschaulichung der geometrischen Eigenschaften der Trainingsstrecke 10 ist hier zentral diagrammatisch eine Kurvenkrümmung K über einer Streckenkoordinate oder Streckenposition X, welche eine aktuelle Position entlang der Trainingsstrecke 10 in der Trainingsfahrtrichtung 12 angibt, aufgetragen. Dabei ist erkennbar, dass es entlang der Trainingsstrecke 10 einige gerade, also krümmungsfreie Abschnitte gibt, die durch Kurven mit unterschiedlichen Kurvenkrümmungen K verbunden sind. Die entsprechenden Kurven sind hier durch Ausschläge von der X-Achse repräsentiert. Ausschläge in positive und negative K-Richtung repräsentieren dabei unterschiedliche Krümmungsrichtungen, also Links- bzw. Rechtskurven. Diese Ausschläge bzw. die dazwischenliegenden geraden Abschnitte entsprechen oder korrespondieren zu den Clustern 18.

Die Cluster 18 können mittels einer, gegebenenfalls iterativen, Clusteranalyse bestimmt werden. Dabei kann beispielsweise ein mehrfaches Clustering durchgeführt werden, um einen Mittelwert von Abständen der einzelnen Geometriewerte 16 jeweils eines der Cluster 18 zu Centroiden, also einem geometrischen Schwerpunkt, des jeweiligen Clusters 18 zu minimieren.

Die so letztlich ermittelten Cluster 18 können dann auf die Trainingsstrecke 10 angewendet werden. Dadurch ergibt sich eine entsprechende segmentierte Trainingsstrecke, die gemäß der Cluster 18 bzw. der durch diese repräsentierten geometrischen Eigenschaften in mehrere Trainingsstreckenabschnitte 22 aufgeteilt ist. Dabei werden also Bereiche der Trainingsstrecke 10, die bestimmte einheitliche o. ä. geometrische Eigenschaften aufweisen, jeweils mit den Clustern 18 abgeglichen und einem der Cluster 18 zugeordnet, der entsprechende geometrische Eigenschaften repräsentiert. Die Cluster 18 entsprechenden nach Abschluss des Trainings bekannten Streckenabschnitten. Diese können beispielsweise durch die jeweilige Fahrassistenzeinrichtung mit bekannter Performanz bewältigt werden.

Figur 1 illustriert hier einen ersten Schritt, dem Clustering basierend auf beispielsweise der Kurvenkrümmung. Gebildete Centroiden der einzelnen Cluster werden anschließend zur weiteren Zuordnung der Cluster genutzt.

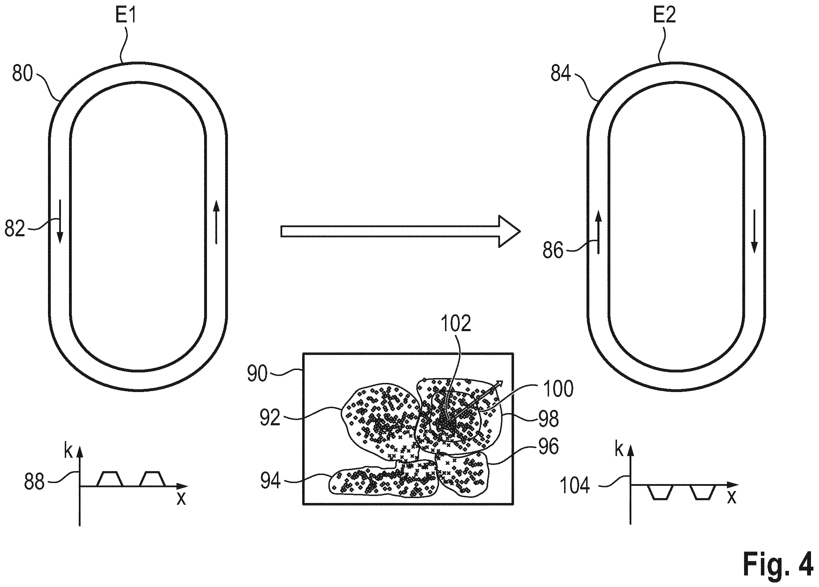

Fig. 4 zeigt eine schematische Übersichtsdarstellung zur Anwendung der geometrisch bestimmten Cluster auf eine neue, potenziell ganz oder teilweise unbekannte Fahrstrecke. Beispielhaft ist hierzu eine erste (hier geschlossene) Evaluierungsstrecke E1, welche durch das Bezugszeichen 80 gekennzeichnet ist, und eine zweite (hier geschlossene) Evaluierungsstrecke E2, welche durch das Bezugszeichen 84 gekennzeichnet ist, gegeben. Dabei kennzeichnet das Bezugszeichen 82 eine erste Fahrtrichtung (hier gegen den Uhrzeigersinn), in welcher die Evaluierungsstrecke E1 befahren wird. Hier ergibt sich die Evaluierungsstrecke E2 aus der Evaluierungsstrecke E1 daraus, dass die Evaluierungsstrecke E2 im Vergleich zur Evaluierungsstrecke E1 in der entgegengesetzten Fahrtrichtung 86 (hier in Uhrzeigerrichtung) durchfahren wird.

Die beiden Diagramme 88 und 104 zeigen dabei jeweils die Kurvenkrümmung k der Evaluierungsstrecke E1 (Graph 88) bzw. E2 (Graph 104) in Abhängigkeit der Streckenmeter (also insbesondere in Abhängigkeit der durchfahrenen Fahrstrecke). Da die beiden Evaluierungsstrecken E1 und E2 in entgegengesetzter Richtung durchfahren werden ist der Verlauf der Kurvenkrümmung aus dem Diagramm 104 zu derjenigen aus dem Diagramm 88 an der X-Achse (etwa Einheit in Streckenmeter) gespiegelt. Beide Evaluierungsstrecken weisen jeweils zwei gerade, also nicht gekrümmte Abschnitte auf, weswegen der Verlauf der Kurvenkrümmung an jeweils zwei Abschnitten entlang der x-Achse verläuft (und die Krümmung Null ist).

Die geometrischen Streckendaten können wiederum in einem Diagramm 90 dargestellt und durch Anwenden der Cluster 92, 94, 96, 98 auf die Evaluierungsstrecken E1 und E2 kann die jeweilige Strecke segmentiert und die einzelnen Segmente können hierdurch jeweils einem der vorab bestimmten Cluster zugeordnet werden.

Das Bezugszeichen 100 kennzeichnet dabei einen Bereich, in welchem Datenpunkte mit kleinerer Distanz zum Clustermittelpunkt 102 des vorab (mittels der Teststrecke) gebildeten Clusters 98 angeordnet sind. Die Streckenabschnitte, welche durch diese innerhalb des Bereichs 100 liegende Datenpunkte widergegeben werden, weisen dabei eine vergleichsweise höhere Ähnlichkeit zu Abschnitten der Teststrecke in Bezug auf denjenigen Datenpunkten, welche nur in dem äußeren Ring außerhalb des Bereichs 100 und innerhalb des Bereichs 98 liegen, auf.

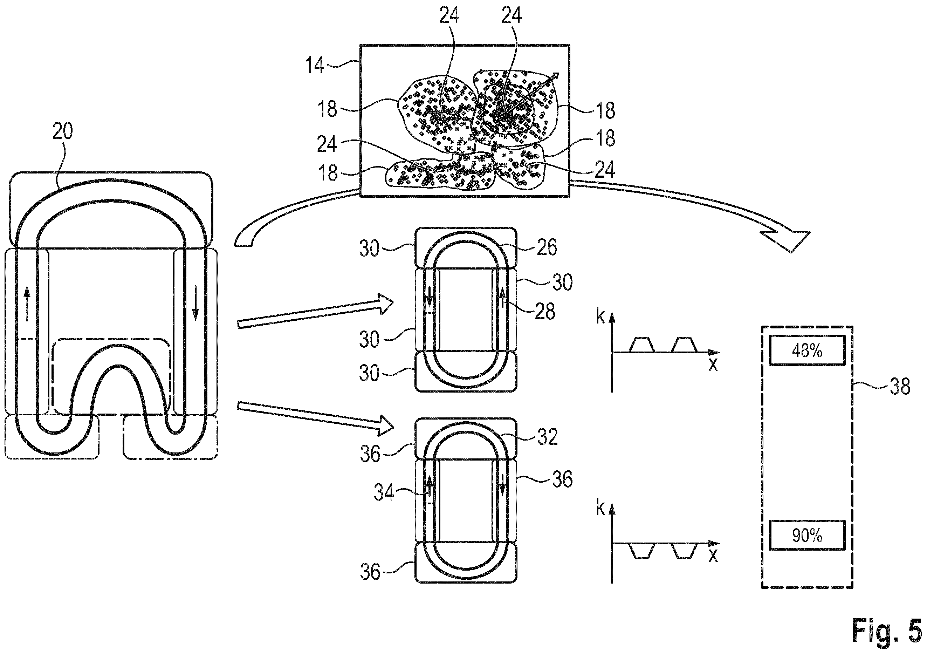

Fig. 5 zeigt eine schematische Übersichtsdarstellung einer Anwendung auf eine neue, potenziell ganz oder teilweise unbekannte Fahrstrecke.

Dabei kann nun, beispielsweise im Anschluss an den ersten Schritt des Clustering, welcher in Fig. 1 illustriert wurde, etwa in einem zweiten Schritt, eine Anwendung der geometrisch bestimmten Cluster auf Evaluierungsstrecken vorgenommen werden. Hierzu erfolgt bevorzugt eine Segmentierung der Strecke und eine Zuteilung der einzelnen Segmente zu vorab bestimmten Clustern.

Bevorzugt erfolgt in einem weiteren, bevorzugt an den zweiten Schritt anschließenden, Schritt eine Bestimmung des Konfidenzmaßes anhand der Übereinstimmung der Cluster (je höher, desto ähnlicher sind die Elemente der Evaluierungsstrecke verglichen mit der Trainingsstrecke).

Beispielhaft sind hier eine erste Evaluierungsstrecke 26 und eine zweite Evaluierungsstrecke 32 vorgegeben (siehe auch Fig. 4), die hinsichtlich ihrer Bekanntheit relativ zu der wenigstens einen bekannten Trainingsstrecke 10 automatisch bewertet werden sollen. Die erste Evaluierungsstrecke 26 kann durch Anwendung der Cluster 18 in erste Streckenabschnitte 30 aufgeteilt werden. Ebenso kann die zweite Evaluierungsstrecke 32 durch Anwendung der Cluster 18 in zweite Streckenabschnitte 36 aufgeteilt werden. Vorliegend unterscheiden sich die erste Evaluierungsstrecke 26 und die zweite Evaluierungsstrecke 32 beispielhaft dadurch, dass eine für die erste Evaluierungsstrecke 26 vorgesehene erste Fahrtrichtung 28 entgegengesetzt zu einer für die zweite Evaluierungsstrecke 32 vorgesehenen zweiten Fahrtrichtung 34 verläuft. Mit anderen Worten werden oder wurden die erste Evaluierungsstrecke 26 und die zweite Evaluierungsstrecke 32 also in entgegengesetzte Richtungen durchfahren.

Wie für die Trainingsstrecke 10 beschrieben, können dabei geometrische Daten der Evaluierungsstrecken 26, 32 erfasst werden, die dann in den durch die vorgegebenen geometrischen Parameter aufgespannten Eigenschaftsraum eingetragen werden können. Diese geometrischen Eigenschaften der Evaluierungsstrecken 26, 32 werden dann jeweils basierend auf den ermittelten Clustern 18 bewertet, um zu detektieren, ob die jeweilige Evaluierungsstrecke 26, 32 bereits bekannte Streckenabschnitte, also Bereiche bereits bekannter und durch die Cluster 18 repräsentierter Geometrie, umfasst. Die punktuell oder abschnittsweise entlang der Evaluierungsstrecke 26, 32 ermittelten geometrischen Eigenschaften können also jeweils einem der Cluster 18 zugeordnet werden. Dazu kann beispielsweise ein Abstand zu den Centroiden, also Clusterschwerpunkten 24 der Cluster 18 ermittelt werden, wobei die Zuordnung dann zu demjenigen Cluster 18 erfolgen kann, zu dessen Clusterschwerpunkt 24 der kleinste Abstand in dem Eigenschaftsraum gegeben ist. Wird also eine neue Fahrstrecke befahren, können über den Abstand der geometrischen Eigenschaften von deren Streckenelementen zu den Clusterschwerpunkten 24 eine Aussage über die Bekanntheit bzw. Neuheit eines jeweiligen Streckenelements getroffen werden.

Eine Sicherheit oder Zuverlässigkeit bzw. eine Fehlerwahrscheinlichkeit der Zuordnung bestimmter geometrische Eigenschaften bzw. Messpunkte oder Streckenabschnitte zu einem der Cluster 18 kann dabei mit zunehmendem Abstand von dem jeweiligen Clusterschwerpunkte 24 zunehmen. Somit ergibt sich also ein gewisses Konfidenzmaß 38, das die Bekanntheit der jeweiligen neuen Strecke, hier also der Evaluierungsstrecken 26, 32, im Kontext oder relativ zu der wenigstens einen bekannten Trainingsstrecke 10 bzw. deren geometrischen Eigenschaften angibt.

Im vorliegenden Beispiel umfassen die ersten Streckenabschnitte 30 der ersten Evaluierungsstrecke 26 zwei gerade, also krümmungsfreie Streckenabschnitte, für die eine Übereinstimmung mit einem der Cluster 18 gefunden werden kann, da auch die Trainingsstrecke 10 entsprechende gerade Trainingsstreckenabschnitte 22 umfasst. Die erste Evaluierungsstrecke 26 umfasst jedoch auch erste Streckenabschnitte 30, die einer Linkskurve mit relativ geringer Kurvenkrümmung K entsprechen, wofür es in der Trainingsstrecke 10 keine exakte Entsprechung gibt. Dementsprechend ist also die erste Evaluierungsstrecke 26 als teilweise bekannt einzustufen, sodass anhand der entsprechend relativ niedrigen Übereinstimmung mit den Clustern 18 bzw. einem relativ großen Abstand zu deren Clusterschwerpunkten 24 als das Konfidenzmaß 38 beispielsweise einen Bekanntheitsgrad von 48 % für die erste Evaluierungsstrecke 26 ergeben kann.

Demgegenüber umfasst die zweite Evaluierungsstrecke 32 neben den geraden, krümmungsfreien Abschnitten zweite Streckenabschnitte 36, die aufgrund der entgegengesetzten zweiten Fahrtrichtung 34 eine Rechtskurve mit relativ geringer Kurvenkrümmung K repräsentieren. Für diese gibt es in der Trainingsstrecke 10 eine zumindest teilweise Übereinstimmung, da auch die Trainingstrecke 10 in der Trainingsfahrtrichtung 12 eine solche Rechtskurve umfasst, wenn auch mit etwas anderer Kurvenkrümmung K. Damit kann für sämtliche der zweiten Streckenabschnitte 36 der zweiten Evaluierungsstrecke 32 ein entsprechend geringerer Abstand zu jeweils einem der Clusterschwerpunkte 24 ermittelt werden. Da die zweite Evaluierungsstrecke 32 hinsichtlich ihrer Geometrie jedoch nicht exakt der segmentierten Trainingsstrecke 20 bzw. deren Trainingsstreckenabschnitten 22 entspricht, wird hier keine 100-prozentige Übereinstimmung ermittelt, sondern beispielsweise ein Bekanntheitsgrad von 90 % als das Konfidenzmaß 38 für die zweite Evaluierungsstrecke 32.

Die durch das Konfidenzmaß 38 gelieferte Aussage über die Bekanntheit ermöglicht beispielsweise die Nutzung entsprechender Informationen für Sicherheitsfunktionen, welche einen datengetriebenen Ansatz für Streckenabschnitte geringerer Bekanntheit überwachen können, sowie eine besonders aussagekräftige Beurteilung, wie beispielsweise ein zum Trainieren der jeweiligen Fahrassistenzeinrichtung verwendeter maschineller Lernansatz, insbesondere Reinforcement-Learning-Agent, auf unbekannten Strecken agieren bzw. performen wird.

Je höher das Konfidenzmaß 38 ist, je genauer, eindeutiger oder zuverlässiger also die geometrischen Eigenschaften bzw. die entsprechenden Datenpunkte in dem Eigenschaftsraum der jeweiligen bewerteten oder zu bewertenden Fahrstrecke jeweils einem der Cluster 18 zugeordnet werden können, desto wahrscheinlicher ist es, dass die Fahrstrecke bzw. ein jeweiliger Streckenabschnitt bekannt ist.

Das Konfidenzmaß 38, also die Bekanntheit der entsprechenden Streckenabschnitte oder Fahrstrecken insgesamt, kann dann in eine Beurteilung einer Generalisierbarkeit oder Generalisierungsfähigkeit der jeweiligen Fahrassistenzeinrichtung bzw. einer zu deren Training verwendeten Trainingsmethode oder Trainingseinrichtung, beispielsweise des Reinforcement-Learning-Agenten, einfließen. Dazu wird die Performanz der Fahrassistenzeinrichtung nach Abschluss von deren Training auf verschiedenen Teststrecken, hier also beispielsweise anhand der Evaluierungsstrecken 26, 32, untersucht. Um eine Aussage über die Anpassung auf neue Umgebungen, also Fahrstrecken oder Streckenabschnitte, treffen zu können, wird deren Streckengeometrie beispielsweise in einem unüberwachten Lernansatz mittels des erläuterten geometrischen Clusterings objektiv beschrieben. Dabei werden Unterschiede zwischen der Streckengeometrie in einem Trainingsdatensatz - hier also beispielsweise der Trainingsstrecke 10 - sowie im jeweiligen Testdatensatz - hier also beispielsweise den Evaluierungsstrecken 26 - 32, aufgezeigt. Unterscheiden sich die Streckengeometrien signifikant voneinander, so kann dies in Form eines entsprechend geringen Konfidenzmaßes 38 als Gewichtung zur Beurteilung der Fahrassistenzeinrichtung in unbekannten Fahrmanövern bzw. entlang unbekannter Fahrstrecken genutzt werden. Bei relativ geringen Unterschieden der Streckengeometrien, also relativ großer Bekanntheit bzw. relativ großem Konfidenzmaß 38, kann die Beurteilung der Generalisierbarkeit hingegen abgeschwächt werden. Zur Bewertung der Generalisierbarkeit kann also die auf einer neuen Fahrstrecke ermittelte Performanz der Fahrassistenzeinrichtung sowie das für diese Fahrstrecke ermittelte Konfidenzmaß 38, beispielsweise durch eine vorgegebene Kombination oder Gewichtung, berücksichtigt werden. Dies kann in einem Zwischenschritt während des Trainings zum Evaluieren eines Trainingsfortschrittes der Fahrassistenzeinrichtung ebenso wie nach Abschluss des Trainings, also zur Inferenzzeit, durchgeführt werden.

Die hier beschriebenen Verfahren ermöglichen eine objektivere Beurteilung der Performanz eines datengetriebene Lernansatzes in neuen Umgebungen, also bei der Verarbeitung neuer Daten, die beispielsweise während eines Trainings nicht verwendet wurden, als dies mit herkömmlichen Ansätzen möglich ist. Eine solche Objektivierung kann dabei durch Heranziehen des geometrischen Clusterings als Bewertungsmetrik bzw. als Grundlage für das Bestimmen der Bekanntheit als Bewertungsmetrik automatisiert erfolgen. Somit wird eine besonders schnelle Erprobung oder Überprüfung einer Robustheit einer entsprechenden Algorithmik durch besonders einfache Detektion von bisher nicht berücksichtigten, also unbekannten Fahrmanövern oder Streckenabschnitten ermöglicht. Bisherige Ansätze, bei denen beispielsweise subjektiv eine Teststrecke mit der wenigstens einen Trainingsstrecke 10 rein visuell verglichen wird, kann in der Praxis nur von bedingter Aussagekraft bezüglich der Fähigkeit zur Generalisierung der jeweiligen Algorithmen sein, da nicht ermittelt wird, wie stark oder in welchem Maße sich die Fahrstrecken objektiv voneinander unterscheiden. Somit ist bei derartigen Ansätzen ein relativ großes Maß an Expertenwissen sowie manuellem Arbeitsaufwand notwendig, was auch mit entsprechenden Kosten verknüpft ist. Dies kann durch das vorliegend beschriebene Verfahren eingespart werden, wobei dieses auch keinerlei Beschränkung hinsichtlich einer möglichen geometrischen Komplexität oder Kompliziertheit zu bewertender Fahrstrecken unterliegt.

Insgesamt zeigen die beschriebenen Beispiele wie ein geometrisches Clustering als Maß für eine Konfidenz für eine Bewertung der Generalisierbarkeit eines lernfähigen Modells, beispielsweise eines Reinforcement-Learning-Agenten für adaptive Regelstrategien automatischer Fahrfunktionen, verwendet werden kann, um letztlich einen besonders sicheren Einsatz einer entsprechenden Fahrassistenzeinrichtung, also einen besonders sicheren automatischen Fahrbetrieb eines Kraftfahrzeugs zu ermöglichen.

Anhand der Figuren 1, 4 und 5 wurde obig bereits das geometrische Clustering als objektives Gütefunktional zur Beurteilung der Generalisierbarkeit eines Reinforcement Learning Agenten für adaptive Regelstrategien automatischer Fahrfunktionen eingeführt.

Darauf aufbauend wird nun die Methode des Clusterings verwendet, um auf Basis von geometrischen Kenngrößen sowie Größen zur Beschreibung einer Trajektorie, insbesondere namentlich das Geschwindigkeits- sowie das Beschleunigungsprofil, ein Konfidenzmaß über die Neuheit der vorliegenden Situation zu erhalten. Anhand dessen wird anschließend der Agent in seinem Interaktionsumfang verändert. Die Einordnung von bereits bekannten Datenpunkten in sogenannte Cluster soll anschließend genutzt werden, um White Spots zu detektieren. Dabei handelt es sich um Untermengen neuer Datenwolken, welche entweder nicht eindeutig einem Cluster zugeordnet werden können oder nur eine sehr geringe Korrelation zu einem Cluster haben. Diese Information wird anschließend in einem Reinforcement Learning Framework zum gerichteten Nachtraining eines Agenten genutzt. Somit kann entweder die Exploration in ihrer Rate basierend auf den Informationen verändert werden, um damit eine erhöhte Fahrsicherheit trotz möglicher Exploration zu erlangen oder der Agent in seiner Stellaktivität eingeschränkt werden. Außerdem kann eine Beurteilung der Notwendigkeit eines Nachtrainings stattfinden (sogenanntes "Live-long-learning").

In derzeitigen Ansätzen werden Explorationsraten bei deterministischen Policies (engl. Policy, dt. "Strategie") meist über den zeitlichen Verlauf reguliert, sodass zu Beginn eine umfangreiche Exploration stattfindet und über den Zeitfortschritt diese abnimmt. Bei stochastischen Policies wird die Explorationsrate durch die vergangenen Erfahrungen angepasst und ist somit direkt Teil der Policy.

Es gibt heuristische Verfahren zur Erkundung des Suchraumes, wie z.B. Tabu Search (vgl. z.B. Abramson et al., Tabu Search Exploration for On-Policy Reinforcement Learning, In: 4. 10.1109/IJCNN.2003.1224033, 2013), welche mögliche Lösungen bewerten und eine zeitliche Auswahl dieser beschränken. Die Tabu Liste kann als Auswahlkriterium, wie oft eine gewisse Aktion genutzt wurde, dienen, gibt aber in einem hochdimensionalen Zustands- und Aktionsraum nur einen verringerten informativen Mehrgewinn.

Hinzu kommen Bayessche Ansätze, welche einen informativen Mehrgewinn bzgl. der Bestimmtheit ("Certainty") einer Aktion in einem State geben können. Eine weitere Möglichkeit im Bereich der Exploration für das Reinforcement Learning ist das Meta-Learning, bei dem neben der Policy auch eine Explorationsfunktion erlernt wird (Garcia, Francisco M., and Philip S. Thomas. "A meta-MDP approach to exploration for lifelong reinforcement learning." arXiv preprint arXiv:1902.00843 (2019)).

Bei deterministischen Policies und der damit verbundenen Exploration ist diese zeitlich abhängig und erfolgt außerdem unter festen Vorgaben und berücksichtigt nicht den aktuellen situativen Informationsgehalt.

Dennoch kann auch hierbei keine Explorationsgüte prädiziert werden, da der Observation State des Agenten nicht "a priori" bekannt ist und somit nicht gesagt werden kann, in welcher Situation der Agent wie sehr exploriert. Da in manchen Situationen unabhängig vom Informationsgehalt eine Exploration eher unerwünscht oder nur in sehr geringem Umfang erwünscht ist (Fahren am Limit ohne Sicherheitsmarge), ist eine Prädiktion der Uncertainty über zukünftige Fahrsituationen in Kombination mit der Explorationsrate ein großer Mehrwert.

Die Tabu-Liste eignet sich nicht für hochdimensionale Zustands- oder Aktionsräume, da eine Mehrdeutigkeit einzelner Datenpunkte hier meist weniger vorliegt. Bei der genannten Veröffentlichung im Bereich Bayesscher Methoden (Garcia, Francisco M., and Philip S. Thomas. "A meta-MDP approach to exploration for lifelong reinforcement learning." arXiv preprint arXiv:1902.00843 (2019)) wird ein Fokus auf die geeignete Auswahl der Aktion bei der Exploration gesetzt und nicht eine generelle Abwägung, ob exploriert werden soll, getroffen. Er fokussiert außerdem die Exploration für unterschiedliche Tasks (unterschiedliche MDPs - MDP Akronym für "Markov Decision Process", dt. "Markow-Entscheidungsprozess"), welches sich beispielsweise sinnvoll für verschiedene Fahrzeugderivate einsetzen lässt. Diese Veröffentlichung betrachtet jedoch nicht die Verbesserung oder Anpassung der Exploration einer Policy für ein spezifisches MDP (z.B. ein Fahrzeug).

Bisher wurden Sicherheitsfunktionen eingefügt, die die Fahrzeugstabilität überwachen und geschulte Sicherheitsfahrer in Kombination mit einer weiteren manuellen Überwachung der Algorithmik während der Fahrversuche.

Anhand von Größen der Trajektorienplanung (z.B. Referenzkrümmung, Geschwindigkeit sowie Beschleunigung) sowie bereits erlebter Fahrszenarien werden Cluster gebildet. Eine Zuordnung von neuen Fahrsituationen kann anschließend für neue Cluster online im Fahrzeug stattfinden, wie obig im Rahmen von Figur 1 erläutert.

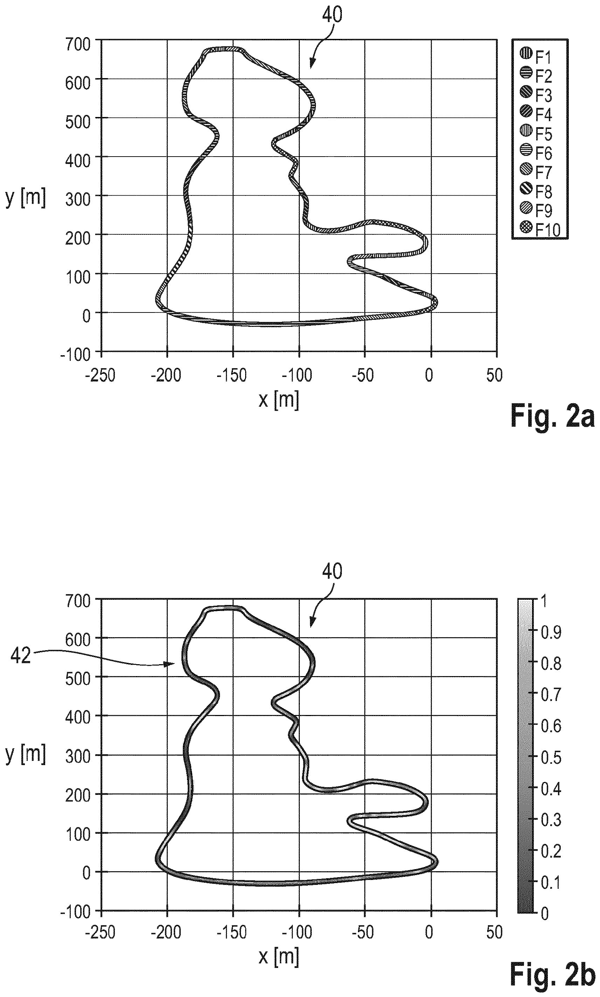

Über eine zu definierende Metrik aus beispielsweise Abstand zum Zentrum des Clusters, ggf. dem zeitlichen Verlauf fahrdynamischer Kenngrößen oder der Bestimmtheit des Agenten in der jeweiligen Fahrsituation (Kombination mit Bayesschen Ansätzen sind hier möglich) kann eine Aussage bezüglich des Explorationsbetrags getroffen werden. Dies wird anhand der Figuren 2a - 2f veranschaulicht.

Die Figuren 2a - 2b veranschaulichen dabei einen ersten Schritt, in welchem das Clustering basierend auf den Streckendaten einer Trainingsstrecke 40 erfolgt. Durch eine Clusteranalyse wird die Trainingsstrecke in eine Vielzahl von Streckenabschnitte unterteilt, wobei die Streckenpunkte jedes Streckenabschnitts (genau) einem Cluster zugeordnet sind.

Bei der in Fig. 2a verwendeten Trainingsstrecke 40 hat die hier vorgenommene Clusteranalyse 10 verschiedene Cluster ergeben, welche durch verschiedene Bemusterungsarten gekennzeichnet sind. Mit anderen Worten kennzeichnet jede der zehn Bemusterungsarten F1 - F10 die Zugehörigkeit zu (genau) einem bestimmten Cluster.

In Fig. 2a ist die Zuordnungen der einzelnen Streckenabschnitte durch die jeweilige Bemusterungsart desjenigen Clusters, dem dieser Streckenabschnitt zugeordnet ist, illustriert. Zu erkennen ist dabei, dass mehrere (nicht benachbarte) Streckenabschnitte (welche etwa einem ähnlichen Krümmungsverlauf aufweisen) demselben Cluster zugeordnet sind.

Für jeden Streckenpunkt der Trainingsstrecke kann sodann ermittelt werden, wie gut die jeweiligen Streckenpunkte durch die gebildeten Cluster angenähert werden, beispielsweise indem die Distanz des jeweiligen Datenpunkts (welcher dem Streckenpunkt zugeordnet ist) zu dem zuvor bestimmten Centroiden (des Clusters, in welchem der Datenpunkt liegt), ermittelt wird. In Fig. 2b ist in der Darstellung 42 für jeden Streckenpunkt ein (in dem Bereich zwischen 0 und 1) normalisierter Abstand zu dem (jeweiligen) Cluster Centroiden dargestellt.

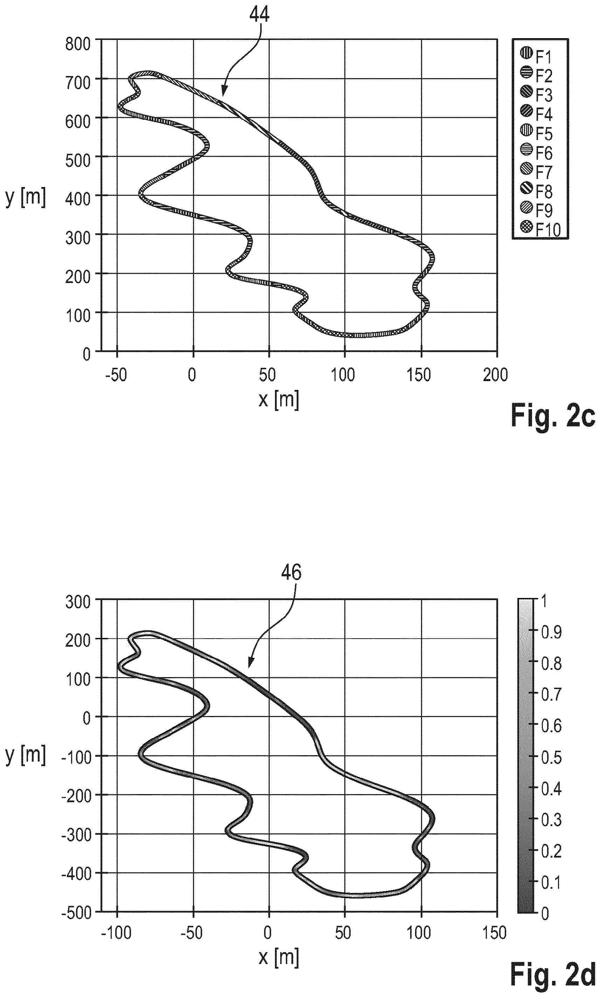

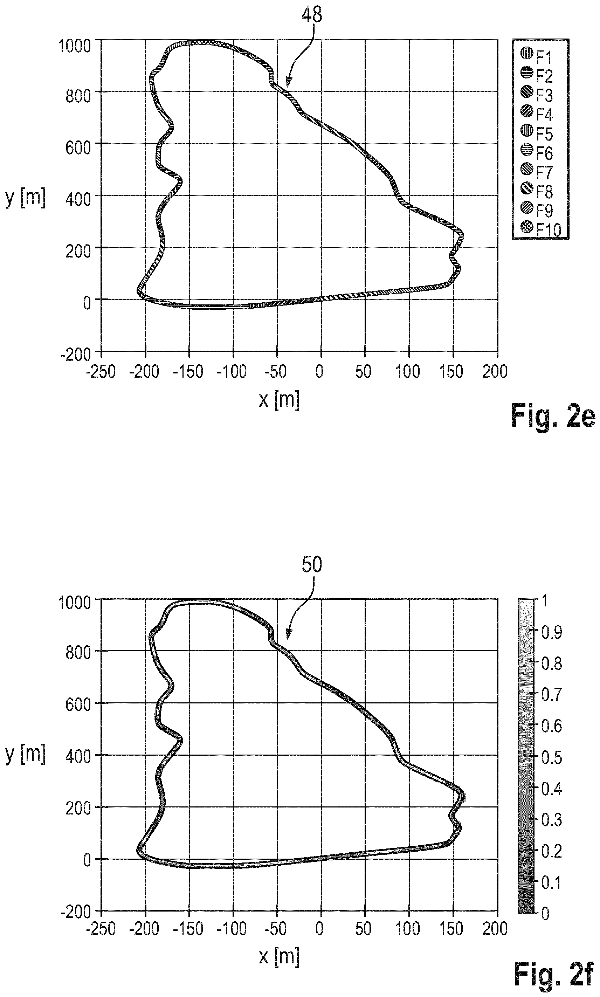

Die Figuren 2c und 2e illustrieren einen zweiten Schritt, in welchem eine Zuordnung neuer Datenpunkte der neuen Strecke zu den zuvor bestimmten Clustern (und somit Centroiden) aus Fig. 2a vorgenommen wird. In diesem werden die in dem ersten Schritt (illustriert durch Fig. 2a) gebildeten Cluster angewandt auf die Streckendaten der beiden bisher unbekannten Strecken 44 (siehe Fig. 2c) und 48 (siehe Fig. 2e). Hierzu werden die beiden Strecken 44 und 46 entsprechend der basierend auf der Trainingsstrecke 40 gebildeten Cluster in Streckenabschnitte unterteilt. Dabei ist jeder der so entstandenen Streckenabschnitte einem der vorab gebildeten Cluster zugeordnet. Hierdurch entsteht jeweils in Fig. 2c und in Fig. 2e ein geclusterter Kurs.

Die Zuordnung zu einem bestimmten Cluster ist hier, wie in Fig. 2a, durch die verschiedene Bemusterung der jeweiligen Streckenabschnitte entsprechend jeweils einer der zehn verschiedenen Bemusterungsarten F1 - F10 illustriert.

Für die beiden unbekannten Strecken 44 und 48 lässt sich nun jeweils für jeden Datenpunkt bzw. Streckenpunkt (oder auch Streckenabschnitt) eine für eine Unsicherheit ("Uncertainty") charakteristische Größe ermitteln, indem bevorzugt ein, hier normalisierter, Abstand zu dem (jeweiligen) Cluster Centroid ermittelt wird. Eine derartige normalisierte Distanz zum Cluster Centroiden ist entlang der jeweiligen Strecken 44 und 48 in den beiden Illustrationen 46 (siehe Fig. 2d) und 50 (Fig. 2f) veranschaulicht.

Aus dieser für die jeweilige Unsicherheit (eines Streckenpunkts) charakteristische Größe kann sodann eine Aussage bezüglich eines Explorationsbetrags getroffen werden.

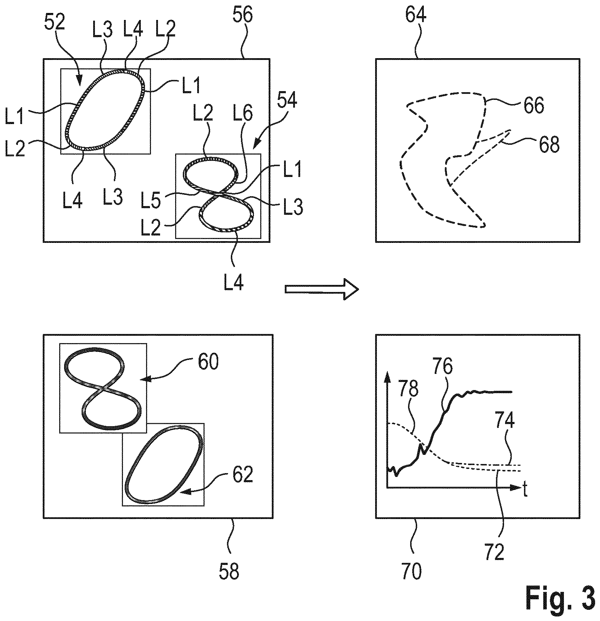

Hinzukommend kann eine Entscheidung über weitere Exploration ("Live-Long-Learning") mittels der Metrik getroffen werden, beispielsweise wenn die Uncertainty in gewissen Bereichen hoch ist und eine weitere Exploration hier keine Sicherheitsbedenken aufwirft. Dies ist in Fig. 3 veranschaulicht.

Dabei wird durch das linke obere Bild 56 zunächst nochmals das Vorgehen des Clustering illustriert. Hier wird zur Datenauswahl ("data selection") ein Clustering zweier (hier jeweils geschlossenen) Pfade bzw. Strecken 52, 54 basierend auf Merkmalen einer geplanten Trajektorie wie Krümmung, Geschwindigkeit oder Beschleunigung vorgenommen. Hierdurch erhält man die entsprechend verschiedenen Clustern L1 - L6 unterteilten Pfade bzw. Strecken 52, 54.

Im linken unteren Bild 58 wird eine Unsicherheits-Bewertung veranschaulicht. Hierzu kann eine Performanz-Evaluation vorgenommen werden, indem beispielsweise eine Unsicherheit basierend auf beispielsweise einer Distanz-Metrik (und auf Grundlage des vorangegangenen Clustering) berechnet wird.

Dies ermöglicht, wie in dem Bild 64 rechts oben illustriert wird, eine sichere Erkundung ("Exploration"). So könnte beispielsweise bei Exploration eine Prognose zu einer, von einer bekannten Trajektorie 66 abweichenden Trajektorie 68 in Bezug auf eine Performanz (der Regeleinrichtung bzw. des Agenten) getroffen werden und basierend hierauf eine Explorations-Strategie in Abhängigkeit von einer Unsicherheit angepasst werden. Bevorzugt wird zur sicheren Exploration die Performanz in einem unbekannten Zustandsraum ermittelt oder prognostiziert. Bevorzugt kann eine Explorations-Strategie in Bezug auf die Unsicherheit ("Uncertainty") angepasst werden.

Durch die Prädiktion der Unbestimmtheit von verschiedenen in der Zukunft liegenden Fahrsituationen kann die Explorationsrate beeinflusst werden, noch bevor diese Situation auftritt.

Dies hat vor allem Vorteile aus regelungstechnischer Sicht, da ein verbesserter Signalverlauf erreicht werden kann. Somit kann in sicherheitskritischen Fahrmanövern die Exploration frühzeitig eingeschränkt werden, so dass es zu keiner Gefahrensituation durch zusätzliche Exploration kommen kann.

Daneben wird ein lebenslanges Lernen ("Livelong Learning") ermöglicht.

Ein weiterer Mehrwert ist ein Ansatz zur Bestimmung, wann Exploration notwendig ist und wann nicht. Viele wissenschaftlichen Arbeiten zu Explorationsstrategien beschäftigen sich mit der Frage, welche Aktion exploriert werden soll (Garcia, Francisco M., and Philip S. Thomas. "A meta-MDP approach to exploration for lifelong reinforcement learning." arXiv preprint arXiv:1902.00843 (2019)) aber nicht, wann exploriert werden soll und wann nicht. Letzteres steht jedoch in direktem Zusammenhang mit dem Bereich des "Live-long-learnings". Eine Konvergenz der Explorationsrate ist ebenfalls für die Konvergenz der Algorithmik notwendig, sodass nicht fortlaufend beliebig exploriert werden kann. In Bereichen, in denen jedoch der Zustandsraum noch nicht ausreichend erkundet oder in neuen Fahrsituation ist aber eine weitere Exploration durchaus erwünscht. Eine Metrik zur Bestimmung, wann weiter Exploration stattfinden soll und wann nicht kann dabei das Problem der Konvergenz adressieren und gleichzeitig mit neuen Fahrsituationen, sich ändernden Fahrzeugeigenschaften oder Kundenwünsche umgehen.

Bei aus dem Stand der Technik bekannten deterministischen Policies (Verfahren) ist die Exploration rein eine Funktion der Zeit [y(t)].

Durch das hier vorgeschlagene Verfahren wird eine Entkopplung der Exploration im deterministischen Fall von der zeitlichen Komponente ermöglicht, sodass die Exploration nicht mehr eine Funktion ausschließlich der Zeit ist sondern eine Funktion der Zeit und der Unsicherheit z.B. y(t, Sigma). Üblicherweise soll die Explorationsrate über die Zeit abnehmen und kann über einen vorab definierten Zeitraum zu Null ergeben. Dies ist jedoch unerwünscht beim "Live long learning", da weder ein bestimmter Zeitraum vorgeben werden soll, noch zu lernen aufgehört werden soll. Pauschal soll aber keine dauerhafte Exploration stattfinden.

Im Falle stochastischer Policies, in welchen die Policy keinen expliziten Wert angibt sondern die Parameter einer Wahrscheinlichkeitsverteilung, nimmt im zeitlichen Verlauf durch die Belohnung ("Reward") und einer hieran angepassten Entscheidung, ob eine Exploration oder eine Exploitation vorzuziehen ist, die Exploration ab. Der Grund hierfür liegt darin, dass die Bekanntheit des jeweiligen Zustands maßgeblich die Wahrscheinlichkeitsverteilung beeinflusst. Wird aber eine Explorationsrate in Bezug auf eine Unsicherheit angepasst, wie es beispielsweise durch das hier vorgeschlagene Verfahren ermöglicht wird, kann beispielsweise Exploration in unbekannten Zustandsräumen vorgenommen werden, welche gleichwohl in Bezug auf eine Sicherheit vorgegebene Erfordernisse erfüllt. Durch eine solche sichere Exploration lassen sich vorteilhaft instabile Fahrsituationen vermeiden, so dass durch das vorgeschlagene Verfahren eine hohe Fahrsicherheit bei gleichzeitiger Exploration erreicht werden kann..

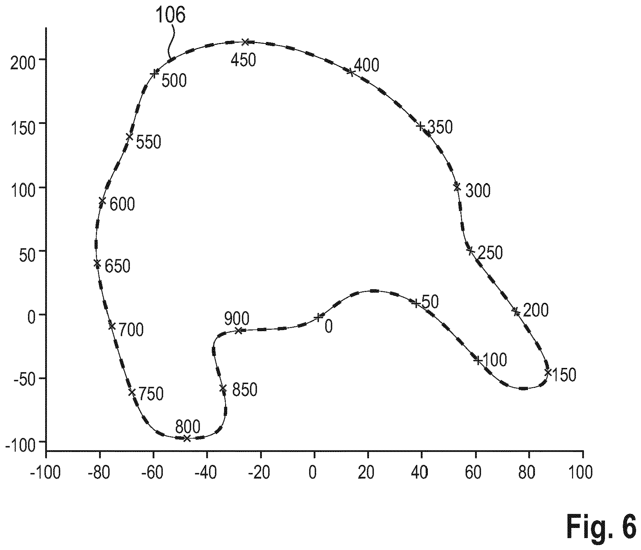

Die Figuren 6 - 10 erläutern eine beispielhafte Umsetzung anhand von Messdaten aus einem Fahrversuch im Prüfgelände Ehra-Lessin.

Die in Fig. 6 dargestellte Strecke 106 zeigt dabei eine zu bewertende Fahrstrecke bzw. die Evaluierungsstrecke mit vermerkten Streckenmetern. Die beiden Achsen stellen dabei eine räumliche Ausdehnung der Evaluierungsstrecke in zwei einander senkrechte Richtungen einer Ebene, etwa Koordinaten in x- und y-Position (welche aus einem Weltkoordinatensystem, wie etwa GPS-Daten, umgerechnet werden kann).

Der Streckenmeter 0 kennzeichnet dabei den Rundenstartpunkt. Ein Reinforcement Learning Agent wurde auf der Strecke E2 aus Figur 4 trainiert und auf dieser Strecke angewendet. Somit sind viele Systemzustände (Kurvenkombinationen, Geschwindigkeitsprofile, usw.) unbekannt für den Agenten. Die Unsicherheit ("Uncertainty") wird bevorzugt über eine relative Distanzmetrik bestimmt, welche sich anhand der Cluster ergibt, die auf Basis der Trainingsstrecke bestimmt wurden.

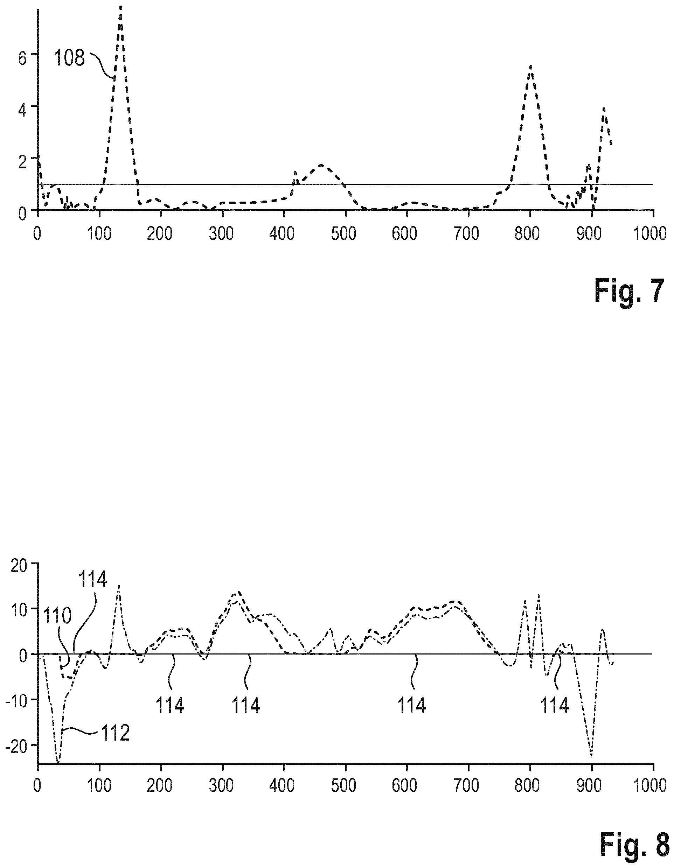

Fig. 7 zeigt die Unsicherheit 108 ("Uncertainty") über den Streckenmeter. Als Schwellwert wurde hier eine Uncertainty ab dem Wert von 1 angenommen. Ist die Uncertainty größer gleich dem Schwellwert, dann wird bevorzugt das additive Regelsignal des Reinforcement Learning Agenten abgestellt.

Um einen ruckfreien Übergang herzustellen, wird eine Vorausschau sowie zeitliche Reduzierung des Signals verwendet.

Fig. 8 zeigt das Regelsignal ML des Agenten über den Streckenmeter. Das Bezugszeichen 114 kennzeichnet dabei die Nulllinie. Das Bezugszeichen 112 stellt den Verlauf des Stellsignals ohne Einfluss der Unsicherheit ("Uncertainty") und das Bezugszeichen 110 das Stellsignal mit Berücksichtigung der Unsicherheit ("Uncertainty"). Es ist zu erkennen, dass in den Bereichen hoher Unsicherheit ("Uncertainty") (vgl. Fig. 7 und Bezugszeichen 108) der Agent deaktiviert wird.

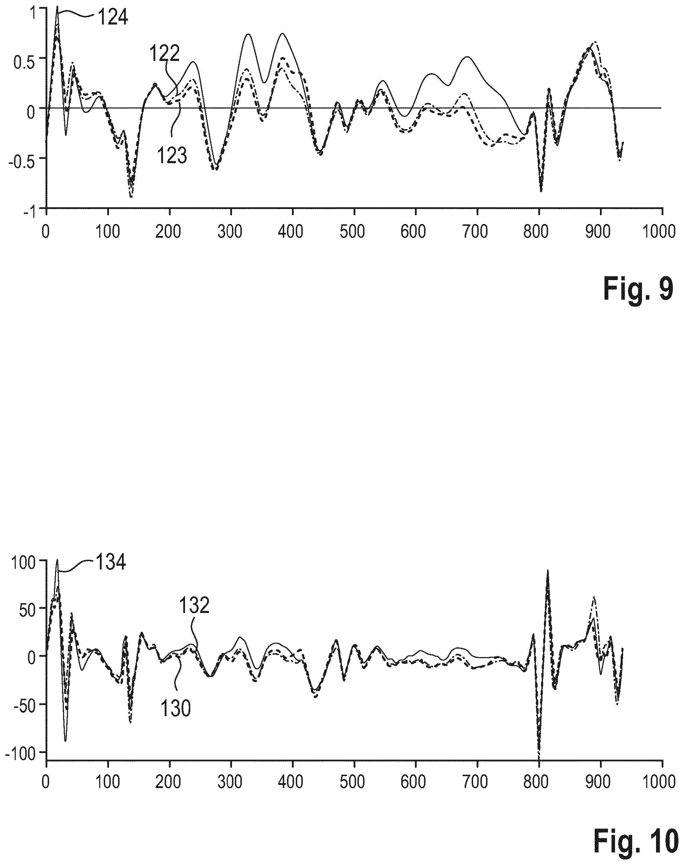

Fig. 9 zeigt die Querablage dy über den Streckenmeter. Das Signal 124 stellt den Verlauf der Querablage ohne aktiven Agenten dar, das Signal 122 mit Agenten dauerhaft aktiv und das mit dem Bezugszeichen 123 gekennzeichnete Signal die Querablage mit aktivem Agenten basierend auf der Unsicherheit ("Uncertainty"). Bei Berechnung der gemittelten Querablage führt der Agent mit Berücksichtigung der Uncertainty zur Anpassung seines Stellsignals zu einer minimalen gemittelten Querablage im Vergleich der drei Varianten.

Fig. 10 zeigt die Regelaktivität FB über den Streckenmeter. Das Bezugszeichen 134 kennzeichnet dabei die Regelaktivität ohne aktiven Agenten, das Bezugszeichen 132 die Regelaktivität mit dauerhaft aktivem Agenten und das Bezugszeichen 130 die Regelaktivität mit aktivem Agenten basierend auf der Uncertainty.

Bei Berechnung der gemittelten Regelaktivität reduziert hier ebenfalls der Agent mit Berücksichtigung der Uncertainty zur Anpassung seines Stellsignals die gemittelte Regelaktivität maximal im Vergleich der drei Varianten.

### Bezugszeichenliste

- 1: Fahrzeug
- 10: Trainingsstrecke, bekannte Fahrstrecke
- 12: Trainingsfahrtrichtung
- 14: Streckendaten
- 16: Geometriewerte
- 18: Cluster
- 20: segmentierte Trainingsstrecke
- 22: Trainingsstreckenabschnitte
- 24: Clusterschwerpunkte
- 26: erste Evaluierungsstrecke
- 28: erste Fahrtrichtung
- 30: erste Streckenabschnitte
- 32: zweite Evaluierungsstrecke
- 34: zweite Fahrtrichtung
- 36: zweite Streckenabschnitte
- 38: Konfidenzmaß
- 40: Trainingsstrecke
- 42: Darstellung der normalisierten Distanz zu Cluster Centroid
- 44: unbekannte Strecke
- 48: unbekannte Strecke
- 46, 50: Darstellung der Uncertainty
- 52, 54: Pfad
- 56: Bild zur Veranschaulich Clustering
- 58: Bild zur Veranschaulichung einer Unsicherheits-Bewertung
- 64: Bild zur Veranschaulichung einer sicheren Exploration
- 66, 68: Trajektorie
- 70: Bild zur Veranschaulichung eines lebenslangen Lernens
- 80: Evaluierungsstrecke
- 82: erste Fahrtrichtung
- 84: Evaluierungsstrecke
- 86: zweite Fahrtrichtung
- 106: zu bewertende Fahrstrecke
- 108: Unsicherheit
- 110: Stellsignal mit Berücksichtigung der Unsicherheit
- 112: Stellsignal ohne Einfluss der Unsicherheit
- 114: Nulllinie
- 122: Querablage mit dauerhaft aktivem Agenten
- 123: Querablage mit aktivem Agenten basierend auf der Unsicherheit
- 124: Querablage ohne aktiven Agenten
- E1: Evaluierungsstrecke 1
- E2: Evaluierungsstrecke 2
- F1 - F10: Segmente
- K: Kurvenkrümmung
- X: Streckenposition

## Patentansprüche

1. Verfahren zum Durchführen einer wenigstens teilautomatischen Fahrzeugfunktion, insbesondere einer Fahrfunktion, eines Fahrzeugs in Abhängigkeit von einer zu bewertenden Fahrstrecke (106) mittels einer Fahrassistenzeinrichtung, umfassend die computer-implementierten Verfahrensschritte:
- Bereitstellen einer Vielzahl von Cluster (18) aus Streckendaten in Bezug auf wenigstens eine bekannte Fahrstrecke (10, 84), wobei die Cluster die Streckendaten abschnittsweise gemäß vorgegebener geometrischer Parameter gruppieren;
- Bereitstellen von, insbesondere mittels einer Sensoreinrichtung erfassten, Verlaufsdaten, die einen Verlauf der zu bewertenden Fahrstrecke (106) angeben, und Anwenden der Cluster (18) auf die Verlaufsdaten, um die zu bewertende Fahrstrecke (106) in zu den Clustern (18) korrespondierende Streckenabschnitte (30, 36) aufzuteilen und hierdurch den einzelnen Streckenabschnitten (30, 36) jeweils einen Cluster (18) zuzuordnen;
- Ermitteln einer Unsicherheitsgröße, die charakteristisch ist für eine Unsicherheit in Bezug auf die vorgenommene Zuordnung zwischen wenigstens einem der Streckenabschnitte (30, 36) und dem diesem Streckenabschnitt (30, 36) jeweils zugeordneten Cluster (18), wobei die Unsicherheitsgröße charakteristisch ist für die Unsicherheit der gewählten Cluster-Zuordnung genau eines Streckenabschnitts;
- Ermitteln einer Steuergröße in Abhängigkeit der Unsicherheitsgröße und Bereitstellen der Steuergröße zur Durchführung der Fahrzeugfunktion,
wobei für jeden Streckenabschnitt (30, 36) der zu bewertenden Fahrstrecke, dem ein Cluster (18) zugeordnet ist, in Abhängigkeit von dem jeweils zugeordneten Cluster eine Steuergröße ermittelt und zur Durchführung der Fahrzeugfunktion bereitgestellt wird.

2. Verfahren nach Anspruch 1, **dadurch gekennzeichnet, dass** die vorgegebenen geometrischen Parameter eine lokale Kurvenkrümmung (K), eine lokale Krümmungsrichtung (K) in Fahrtrichtung (12, 28, 34), eine lokale Fahrbahnbreite, einen lokalen Abstand einer Fahrzeugtrajektorie entlang der Fahrstrecke (10, 26, 32) zu einem Fahrbahnrand, einen lokalen Abstand einer Fahrzeugtrajektorie entlang der Fahrstrecke (10, 26, 32) zu einem Fahrstreifenrand, lokale räumliche Streckenkoordinaten (X) entlang der Fahrstrecke (10, 26, 32), eine lokale Geschwindigkeit eines Fahrzeugs entlang der Fahrstrecke (10, 26, 32) und/oder eine lokale Beschleunigung eines Fahrzeugs entlang der Fahrstrecke (10, 26, 32) umfassen.

3. Verfahren nach einem der vorangegangenen Ansprüche, **dadurch gekennzeichnet, dass** zur Ermittlung der Steuergröße ein Interaktionsumfang der Fahrassistenzeinrichtung zur Durchführen der Fahrzeugfunktion in Abhängigkeit der Unsicherheitsgröße verändert und/oder überprüft wird.

4. Verfahren nach einem der vorangegangenen Ansprüche, **dadurch gekennzeichnet, dass** die Unsicherheitsgröße in Bezug auf eine zukünftige potentielle Fahrstrecke als zu bewertende Fahrstrecke beurteilt wird.

5. Verfahren nach einem der vorangegangenen Ansprüche, **dadurch gekennzeichnet, dass** die Fahrassistenzeinrichtung einen Agenten, insbesondere einen Reinforcement-Learning Agenten, zur Ermittlung der Steuergröße verwendet, wobei der Agent zur Exploration einer Umgebung des Agenten geeignet und bestimmt ist, wobei die Exploration, insbesondere eine Explorationsrate und/oder eine Entscheidung über eine weitere Exploration, in Abhängigkeit der Unsicherheitsgröße durchgeführt wird.

6. Verfahren nach dem vorangegangenen Anspruch, **dadurch gekennzeichnet, dass** auf Grundlage der Unsicherheitsgröße beurteilt wird, wann eine Exploration erforderlich ist.

7. Verfahren nach einem der vorangegangenen Ansprüche, **dadurch gekennzeichnet, dass** zur Ermittlung der Unsicherheitsgröße eines bestimmten Streckenabschnitts der zu bewertenden Fahrstrecke eine Korrelation wenigstens eines Teils der Verlaufsdaten in Bezug auf den Streckenabschnitt und dem zugeordneten Cluster (18) ermittelt wird.

8. Verfahren nach einem der vorangegangenen Ansprüche, **dadurch gekennzeichnet, dass** für jeden Cluster ein Clusterschwerpunkt (24) bestimmt ist und bei der Ermittlung der Unsicherheitsgröße wenigstens der Clusterschwerpunkt des den zu bewertenden Verlaufsdaten zugeordneten Clusters berücksichtigt wird.

9. Verfahren nach einem der vorangegangenen Ansprüche, **dadurch gekennzeichnet, dass** die Unsicherheitsgröße basierend auf einer relativen Distanzmetrik auf Grundlage einer Anordnung wenigstens eines Teils der Verlaufsdaten in Bezug auf eine Anordnung wenigstens eines Clusterschwerpunkts eines Clusters in einem durch die vorgegebenen geometrischen Parameter aufgespannten Eigenschaftsraum ermittelt wird.

10. Verfahren nach einem der vorangegangenen Ansprüche, **dadurch gekennzeichnet, dass** eine Fahrsituation des Fahrzeugs in Bezug auf eine Fahrzeugstabilität und/oder Fahrsicherheit bewertet wird und in Abhängigkeit hiervon sowie in Abhängigkeit von der Unsicherheitsgröße die Steuergröße ermittelt wird.

11. Verfahren nach einem der vorangegangenen Ansprüche, **dadurch gekennzeichnet, dass** die Steuergröße charakteristisch ist für eine Stellgröße in einem adaptiven Regelverfahren zur Durchführung der Fahrzeugfunktion.

12. Verfahren nach einem der vorangegangenen Ansprüche, **dadurch gekennzeichnet, dass** die Fahrassistenzeinrichtung ein lernfähiges Modell verwendet und ein weiterer Trainingsprozess in Abhängigkeit von der Unsicherheitsgröße initiiert wird.

13. Verfahren nach dem vorangegangenen Anspruch, **dadurch gekennzeichnet, dass** Streckendaten und/oder Verlaufsdaten identifiziert werden, welche nicht eindeutig einem Cluster (18) zuordenbar sind oder deren Korrelation zu einem zugeordneten Cluster (18) lediglich gering ist, und auf Grundlage der identifizierten Streckendaten und/oder Verlaufsdaten ein weiterer Trainingsprozess des lernfähigen Modells durchgeführt wird.

14. Fahrassistenzeinrichtung für ein Fahrzeug zum Durchführen einer wenigstens teilautomatischen Fahrzeugfunktion, insbesondere einer Fahrfunktion, eines Fahrzeugs in Abhängigkeit von einer zu bewertenden Fahrstrecke (106), welche zur Durchführung folgender Computer-implementierter Verfahrensschritte geeignet und bestimmt ist:
- Bereitstellen einer Vielzahl von Cluster (18) aus Streckendaten in Bezug auf wenigstens eine bekannte Fahrstrecke (10, 84), wobei die Cluster die Streckendaten abschnittsweise gemäß vorgegebener geometrischer Parameter gruppieren;
- Ermitteln von, insbesondere mittels einer Sensoreinrichtung erfassten, Verlaufsdaten, die einen Verlauf der zu bewertenden Fahrstrecke (106) angeben und Anwenden der Cluster (18) auf die zu bewertenden Verlaufsdaten, um die zu bewertende Fahrstrecke (106) in zu den Clustern (18) korrespondierende Streckenabschnitte (30, 36) aufzuteilen und hierdurch den einzelnen Streckenabschnitten (30, 36) jeweils einen Cluster (18) zuzuordnen;
- Ermitteln einer Unsicherheitsgröße, die charakteristisch ist für eine Unsicherheit in Bezug auf die vorgenommene Zuordnung zwischen wenigstens einem der Streckenabschnitte (30, 36) und dem diesem Streckenabschnitt (30, 36) jeweils zugeordneten Cluster (18), wobei die Unsicherheitsgröße charakteristisch ist für die Unsicherheit der gewählten Cluster-Zuordnung genau eines Streckenabschnitts;
- Ermitteln einer Steuergröße in Abhängigkeit der Unsicherheitsgröße und Bereitstellen der Steuergröße zur Durchführung der Fahrzeugfunktion,
wobei für jeden Streckenabschnitt der zu bewertenden Fahrstrecke, dem ein Cluster zugeordnet ist, in Abhängigkeit von dem jeweils zugeordneten Cluster eine Steuergröße ermittelt und zur Durchführung der Fahrzeugfunktion bereitgestellt.

15. Fahrzeug, insbesondere Kraftfahrzeug, umfassend ein Fahrassistenzeinrichtung gemäß dem vorhergehenden Anspruch.

## Claims

1. A method for performing an at least partially automatic vehicle function, in particular a driving function, of a vehicle depending on a travel route (106) to be assessed using a driving assistance device, comprising the computer-implemented method steps of:
- providing a plurality of clusters (18) from route data with respect to at least one known travel route (10, 84), wherein the clusters group the route data section-wise according to predefined geometric parameters;
- providing course data, in particular recorded by means of a sensor apparatus, that indicate a course of the travel route (106) to be assessed, and applying the clusters (18) to the course data in order to divide the travel route (106) to be assessed into route sections (30, 36) corresponding to the clusters (18) and, as a result, to assign one cluster (18) in each case to the individual route sections (30, 36);
- determining an uncertainty variable which is characteristic of an uncertainty with respect to the assignment made between at least one of the route sections (30, 36) and the cluster (18) assigned to said route section (30, 36), wherein the uncertainty variable is characteristic of the uncertainty of the chosen cluster assignment of exactly one route section;
- determining a control variable as a function of the uncertainty variable and providing the control variable for performing the vehicle function, wherein for each route section (30, 36) of the travel route to be assessed, to which route section a cluster (18) is assigned, a control variable is determined depending on the respectively assigned cluster and provided for performing the vehicle function.

2. The method according to claim 1, **characterized in that** the predefined geometric parameters comprise a local curve curvature (K), a local curvature direction (K) in the travel direction (12, 28, 34), a local road width, a local distance of a vehicle trajectory along the travel route (10, 26, 32) to a road edge, a local distance of a vehicle trajectory along the travel route (10, 26, 32) to a lane edge, local spatial route coordinates (X) along the travel route (10, 26, 32), a local speed of a vehicle along the travel route (10, 26, 32) and/or a local acceleration of a vehicle along the travel route (10, 26, 32).

3. The method according to any of the preceding claims,
**characterized in that** an extent of interaction of the driving assistance device for performing the vehicle function is changed and/or checked depending on the uncertainty variable in order to determine the control variable.

4. The method according to any of the preceding claims,
**characterized in that** the uncertainty variable is assessed with respect to a future potential travel route as the travel route to be assessed.

5. The method according to any of the preceding claims,
**characterized in that** the driving assistance device uses an agent, in particular a reinforcement learning agent, to determine the control variable, wherein the agent is suitable and intended for exploring an environment of the agent, wherein the exploration, in particular an exploration rate and/or a decision about further exploration, depends on the uncertainty variable.

6. The method according to the preceding claim, **characterized in that** it is determined based on the uncertainty variable when exploration is required.

7. The method according to any of the preceding claims, **characterized in that** a correlation of at least a portion of the course data with respect to the route section and the assigned cluster (18) is determined in order to determine the uncertainty variable of a particular route section of the travel route to be assessed.

8. The method according to any of the preceding claims,
**characterized in that** a cluster center point (24) is determined for each cluster and at least the cluster center point of the cluster assigned to the course data to be assessed is taken into account during the determination of the uncertainty variable.

9. The method according to any of the preceding claims,
**characterized in that** the uncertainty variable is determined based on a relative distance metric on the basis of an arrangement of at least a portion of the course data with respect to an arrangement of at least one cluster center point of a cluster in a property space spanned by the predefined geometric parameters.

10. The method according to any of the preceding claims,
**characterized in that** a driving situation of the vehicle is assessed with respect to a vehicle stability and/or driving safety and the control variable is determined depending hereon and as a function of the uncertainty variable.

11. The method according to any of the preceding claims,
**characterized in that** the control variable is characteristic of a manipulated variable in an adaptive control method for performing the vehicle function.

12. The method according to any of the preceding claims,
**characterized in that** the driving assistance device uses a teachable model and a further training process is initiated depending on the uncertainty variable.

13. The method according to the preceding claim, **characterized in that** route data and/or course data are identified which cannot be uniquely assigned to a cluster (18) or the correlation of which with an assigned cluster (18) is merely low, and an additional training process of the teachable model is carried out based on the identified route data and/or course data.

14. A driving assistance device for a vehicle for performing an at least partially automatic vehicle function, in particular a driving function, of a vehicle depending on a travel route (106) to be assessed, which driving assistance device is suitable and intended for performing the following computer-implemented method steps:
- providing a plurality of clusters (18) from route data with respect to at least one known travel route (10, 84), wherein the clusters group the route data section-wise according to predefined geometric parameters;
- determining course data, in particular recorded by means of a sensor apparatus, that indicate a course of the travel route (106) to be assessed and applying the clusters (18) to the course data to be assessed in order to divide the travel route (106) to be assessed into route sections (30, 36) corresponding to the clusters (18) and, as a result, to assign one cluster (18) in each case to the individual route sections (30, 36);
- determining an uncertainty variable which is characteristic of an uncertainty with respect to the assignment made between at least one of the route sections (30, 36) and the cluster (18) respectively assigned to said route section (30, 36), wherein the uncertainty variable is characteristic of the uncertainty of the chosen cluster assignment of exactly one route section;
- determining a control variable as a function of the uncertainty variable and providing the control variable for performing the vehicle function, wherein for each route section of the travel route to be assessed, to which route section a cluster is assigned, a control variable is determined depending on the respectively assigned cluster and provided for performing the vehicle function.

15. A vehicle, in particular a motor vehicle, comprising a driving assistance device according to the preceding claim.

## Revendications

1. Procédé permettant l'exécution d'une fonction de véhicule au moins partiellement automatique, en particulier une fonction de conduite, d'un véhicule en fonction d'un itinéraire de conduite à évaluer (106) au moyen d'un dispositif d'assistance à la conduite, comprenant les étapes de procédé mises en œuvre par ordinateur :
- la fourniture d'une pluralité de grappes (18) de données d'itinéraire par rapport à au moins un itinéraire de conduite (10, 84) connu, dans lequel les grappes regroupent les données d'itinéraire par sections selon des paramètres géométriques prédéfinis ;
- la fourniture de données de parcours, en particulier détectées au moyen d'un dispositif formant capteur, qui indiquent un parcours de l'itinéraire de conduite à évaluer (106), et l'application des grappes (18) aux données de parcours, afin de diviser l'itinéraire de conduite à évaluer (106) en sections d'itinéraire (30, 36) correspondant aux grappes (18) et d'affecter ainsi respectivement une grappe (18) à chaque section d'itinéraire (30, 36) ;
- la détermination d'une grandeur d'incertitude caractéristique d'une incertitude par rapport à l'affectation effectuée entre au moins l'une des sections d'itinéraire (30, 36) et la grappe (18) respectivement affectée à ladite section d'itinéraire (30, 36), dans lequel la grandeur d'incertitude est caractéristique de l'incertitude de l'affectation de grappe choisie d'exactement une section d'itinéraire ;
- la détermination d'une grandeur de commande en fonction de la grandeur d'incertitude et la fourniture de la grandeur de commande pour l'exécution de la fonction de véhicule, dans lequel une grandeur de commande est déterminée pour chaque section d'itinéraire (30, 36) de l'itinéraire de conduite à évaluer à laquelle est affectée une grappe (18) en fonction de la grappe respectivement affectée et est fournie pour l'exécution de la fonction de véhicule.

2. Procédé selon la revendication 1, **caractérisé en ce que** les paramètres géométriques prédéfinis comprennent une courbure de virage (K) locale, une direction de courbure (K) locale dans la direction de déplacement (12, 28, 34), une largeur de voie de circulation locale, une distance locale d'une trajectoire de véhicule le long de l'itinéraire de conduite (10, 26, 32) par rapport à un bord de voie de circulation, une distance locale d'une trajectoire de véhicule le long de l'itinéraire de conduite (10, 26, 32) par rapport à un bord de chaussée, des coordonnées d'itinéraire (X) spatiales locales le long de l'itinéraire de conduite (10, 26, 32), une vitesse locale d'un véhicule le long de l'itinéraire de conduite (10, 26, 32) et/ou une accélération locale d'un véhicule le long de l'itinéraire de conduite (10, 26, 32).

3. Procédé selon l'une des revendications précédentes, **caractérisé en ce que,** pour la détermination de la grandeur de commande, un périmètre d'interaction du dispositif d'assistance à la conduite pour l'exécution de la fonction de véhicule est modifié et/ou vérifié en fonction de la grandeur d'incertitude.

4. Procédé selon l'une des revendications précédentes, **caractérisé en ce que** la grandeur d'incertitude est mesurée par rapport à un itinéraire de conduite potentiel futur en tant qu'itinéraire de conduite à évaluer.

5. Procédé selon l'une des revendications précédentes, **caractérisé en ce que** le dispositif d'assistance à la conduite utilise un agent, en particulier un agent d'apprentissage par renforcement, pour la détermination de la grandeur de commande, dans lequel l'agent est adapté et spécifié pour l'exploration d'un environnement de l'agent, dans lequel l'exploration, en particulier un taux d'exploration et/ou une décision concernant une exploration ultérieure, est exécutée en fonction de la grandeur d'incertitude.

6. Procédé selon la revendication précédente, **caractérisé en ce que** le moment où une exploration est nécessaire est mesuré sur la base de la grandeur d'incertitude.

7. Procédé selon l'une des revendications précédentes, **caractérisé en ce que,** pour la détermination de la grandeur d'incertitude d'une section d'itinéraire spécifiée de l'itinéraire de conduite à évaluer, une corrélation d'au moins une partie des données de parcours par rapport à la section d'itinéraire et à la grappe (18) affectée est déterminée.

8. Procédé selon l'une des revendications précédentes,
**caractérisé en ce qu'**un centre de gravité de grappe (24) est spécifié pour chaque grappe et, lors de la détermination de la grandeur d'incertitude, au moins le centre de gravité de grappe de la grappe affectée aux données de parcours à évaluer est pris en compte.

9. Procédé selon l'une des revendications précédentes, **caractérisé en ce que** la grandeur d'incertitude est déterminée sur la base d'une métrique de distance relative sur la base d'un agencement d'au moins une partie des données de parcours par rapport à un agencement d'au moins un centre de gravité de grappe d'une grappe dans un espace de propriété délimité par les paramètres géométriques prédéfinis.

10. Procédé selon l'une des revendications précédentes,
**caractérisé en ce qu'**une situation de conduite du véhicule est évaluée par rapport à une stabilité de véhicule et/ou une sécurité de conduite et la grandeur de commande est déterminée en fonction de cette dernière ainsi qu'en fonction de la grandeur d'incertitude.

11. Procédé selon l'une des revendications précédentes, **caractérisé en ce que** la grandeur de commande est caractéristique d'une grandeur de réglage dans un procédé de régulation adaptatif pour l'exécution de la fonction de véhicule.

12. Procédé selon l'une des revendications précédentes, **caractérisé en ce que** le dispositif d'assistance à la conduite utilise un modèle capable d'apprentissage et un autre processus d'apprentissage est initié en fonction de la grandeur d'incertitude.

13. Procédé selon la revendication précédente, **caractérisé en ce que** des données d'itinéraire et/ou des données de parcours sont identifiées, lesquelles ne peuvent pas être affectées de manière univoque à une grappe (18) ou dont la corrélation avec une grappe (18) affectée est seulement faible, et un autre processus d'apprentissage du modèle capable d'apprentissage est exécuté sur la base des données d'itinéraire et/ou des données de parcours identifiées.

14. Dispositif d'assistance à la conduite pour un véhicule, permettant l'exécution d'une fonction de véhicule au moins partiellement automatique, en particulier une fonction de conduite, d'un véhicule en fonction d'un itinéraire de conduite à évaluer (106), lequel dispositif d'assistance à la conduite est adapté et spécifié pour l'exécution des étapes de procédé mises en œuvre par ordinateur suivantes :
- fourniture d'une pluralité de grappes (18) de données d'itinéraire par rapport à au moins un itinéraire de conduite (10, 84) connu, dans lequel les grappes regroupent les données d'itinéraire par sections selon des paramètres géométriques prédéfinis ;
- détermination de données de parcours, en particulier détectées au moyen d'un dispositif formant capteur, qui indiquent un parcours de l'itinéraire de conduite à évaluer (106), et application des grappes (18) aux données de parcours à évaluer, afin de diviser l'itinéraire de conduite à évaluer (106) en sections d'itinéraire (30, 36) correspondant aux grappes (18) et d'affecter ainsi respectivement une grappe (18) à chaque section d'itinéraire (30, 36) ;
- détermination d'une grandeur d'incertitude caractéristique d'une incertitude par rapport à l'affectation effectuée entre au moins l'une des sections d'itinéraire (30, 36) et la grappe (18) respectivement affectée à ladite section d'itinéraire (30, 36), dans lequel la grandeur d'incertitude est caractéristique de l'incertitude de l'affectation de grappe choisie d'exactement une section d'itinéraire ;
- détermination d'une grandeur de commande en fonction de la grandeur d'incertitude et fourniture de la grandeur de commande pour l'exécution de la fonction de véhicule, dans lequel une grandeur de commande est déterminée pour chaque section d'itinéraire de l'itinéraire de conduite à évaluer à laquelle est affectée une grappe en fonction de la grappe respectivement affectée et est fournie pour l'exécution de la fonction de véhicule.

15. Véhicule, en particulier véhicule automobile, comprenant un dispositif d'assistance à la conduite selon la revendication précédente.
